# EUROPEAN PATENT APPLICATION

(11) **EP 1 785 997 A2**
(43) Date of publication of application: **16.05.2007**
(21) Application number: 06123864.8
(22) Date of filing: 10.11.2006
(51) Int. Cl.: G11B 27/34, G11B 27/034, G11B 27/10, H04N 5/77, H04N 5/225, H04M 1/02

(54) **Digital audio recording/reproduction apparatus for recording and reproducing still image and video and method of providing user interface therein**

(30) Priority: 10.11.2005 KR 20050107641
(71) Applicant: Samsung Electronics Co., Ltd., Suwon-si, Gyeonggi-Do (KR)
(72) Inventor: Cho, Kyung-suk, Suwon-si, Gyeonggi-do (KR)
(74) Representative: Zimmer, Franz-Josef

(57) **Abstract**

A digital audio recording/reproduction apparatus to record and reproduce a music file and to record a still image or video, and a method of providing a user interface therein, includes a controller to control the digital audio recording/reproduction apparatus and to display a user interface which displays a function to activate music playback and recording and reproducing functions of a still image or video, an input unit including buttons to reproduce a music file, to control reproduction of a music file, to capture a still image, to capture video, and to search a menu, a camera module to convert an input image into an electrical signal, a storage unit to store a music file and an image file input from the camera module according to a control by the controller, and an output unit to output a user interface screen, a music file stored in the storage unit, or an image file stored in the storage unit. Accordingly, a user can record an image using a camera or video function while listening to music.

## Description

Aspects of the present invention relate to a digital audio recording/reproduction apparatus, and more particularly, to a digital audio recording/reproduction apparatus having a digital camera function and capable of recording and reproducing music files, along with recording and reproducing video, and a method of providing a user interface therein.

An MP3 player, which is an example of a digital audio recording/reproduction apparatus, allows a user to store various music files and speech files in a memory chip and to selectively listen to the music files or speech files without needing to use a separate tape or a Compact Disk (CD). MP3 players provide high sound quality, similar to that of a CD, when the stored music and speech files are reproduced, i.e. played. In the digital video field, a digital camera which converts an image viewed through a lens into a digital signal, and then stores the converted digital signal in a recording medium, such as a hard disk or a memory card, has become popular.

In order to utilize the MP3 player and digital camera function, a user must purchase both of these products separately. However, the cost of MP3 players and digital cameras can be prohibitive. Moreover, it is inconvenient for users to purchase MP3 players and digital cameras separately, and then have to carry the two products separately.

It is the object of the present invention to provide a digital audio recording/reproduction apparatus to record and reproduce music files and to capture and record video, and a method of providing a user interface in order to effectively provide both a music playback function and a camera function in a digital audio recording/reproduction apparatus which has a camera function.
This object is solved by the subject matter of the independent claims.
Preferred embodiments are defined by the subject matter of the dependent claims.

An aspect of the present invention is to also provide a digital audio recording/reproduction apparatus to record an audio signal and efficiently record and manage the recorded audio signal according to a reception path.

Additional aspects and/or advantages of the invention will be set forth in part in the description which follows and, in part, will be obvious from the description, or may be learned by practice of the invention.

According to an aspect of the present invention, a digital audio recording/reproduction apparatus includes a controller to control a general system of the digital audio recording/reproduction apparatus and to provide a user interface which facilitates music playback and still image or video image, recording and reproducing functions, an input unit including buttons to reproduce a music file, to control reproduction of a music file, to record a still image, to record video, and to search a menu, a camera module to convert an input still or video image into an electrical signal, a storage unit to store a music file and an image file input from the camera module according to commands input to the controller, and an output unit to output a user interface screen provided from the controller, to output a music file stored in the storage unit, and to output an image file stored in the storage unit.

According to another aspect of the present invention, a method of providing a user interface in a digital audio recording/reproduction apparatus to record and reproduce a still image and video includes displaying a recording standby screen to record a still image or video, analyzing a user input signal input through the user interface, and recording a still image, providing an operation mode menu for the still image capturing, displaying an operation menu which includes a camera mode to display a still image and a video recording function, or displaying a recorded image file list based on the analyzed user input signal.

According to another aspect of the present invention, a method of recording an audio or speech signal in a predetermined recording medium, includes setting a file name of the audio or speech signal, wherein the setting of the file name includes automatically setting the file name of the audio or speech signal by setting a recording date and a recording number as a serial number.

According to another aspect of the present invention, a method of receiving a predetermined audio and recording the audio in a predetermined recording medium includes determining whether a predetermined audio is received in a radio mode by a digital audio recording/reproduction apparatus in which the predetermined audio is received through a public radio broadcast, encoding the predetermined audio received in the radio mode, and storing the encoded audio in a memory corresponding to the public radio broadcasting. According to another aspect, if the predetermined audio is not received in the radio mode by the digital audio recording/reproduction apparatus, the method includes determining whether a line-in cable which is connected to an external device is inserted into the digital audio recording/reproduction apparatus, encoding a predetermined audio received through the line-in cable, and storing the encoded audio in a memory corresponding to an external device audio. According to another aspect, if the line-in cable is not inserted into the digital audio recording/reproduction apparatus, the method includes encoding a predetermined audio input through a microphone and storing the encoded audio in a memory corresponding to a microphone audio.

According to an aspect of the present invention, a method of setting a reservation recording of a predetermined radio broadcast includes displaying a setting menu of a frequency or a recording start time of radio broadcasting to be reservation-recorded using a user interface, and setting the reservation recording of the radio broadcast corresponding to a user input signal input through the user interface.

According to another aspect of the present invention, a method of recording digital still images or video compression data in a predetermined recording medium includes determining whether a capturing standby state is in a video recording mode or a still image recording mode, wherein if that the recording standby state is in the still image recording mode, encoding a recording still image and storing the encoded still image in a memory corresponding to a still image; and wherein if the capturing standby state is in the video capturing mode, encoding captured video and storing the encoded video in a memory corresponding to video.

According to another aspect of the present invention, a method of setting a data communication line between a digital audio recording and reproducing apparatus and an external device includes connecting the data communication line between the portable devices, setting the digital audio recording/reproduction apparatus as a host mode, and controlling the external device, which is not set as the host mode, by using digital audio recording and reproducing apparatus, which is set as the host mode.

According to another aspect of the present invention, a method of communicating through a communication line between a digital audio recording and reproducing apparatus and an external device includes setting the digital audio recording/reproduction apparatus as a host device, wherein if the external device that is a slave device is connected, displaying file directory information of the host device or the slave device, and wherein if a user input signal to navigate in a file directory of the host device or the slave device and to select a desired file is received by the digital audio recording and reproducing apparatus, performing a control command of the host device or the slave device according to a transmission operation or the control command. According to another aspect, the communication method may further include displaying directory information of the host device, which is used to perform the control command, and receiving a selection signal of a directory that is to be stored.

These and/or other aspects and advantages of the invention will become apparent and more readily appreciated from the following description of the embodiments, taken in conjunction with the accompanying drawings of which:
FIG. 1 illustrates the external appearance of an MP3 player according to an embodiment of the present invention;
FIG. 2 illustrates a display window of an MP3 player according to an embodiment of the present invention;
FIGs. 3A and 3B are diagrams to describe an operation mode of an MP3 player according to an embodiment of the present invention;
FIGs. 4A through 4J illustrate display states of a user interface in a music mode according to an embodiment of the present invention;
FIG. 5 illustrates a display state of a user interface in a navigation mode according to an embodiment of the present invention;
FIGs. 6A and 6B illustrate display states of a user interface in a play list mode according to an embodiment of the present invention;
FIGs. 7A through 7H illustrate display states of a user interface in a Frequency Modulation (FM) radio mode according to an embodiment of the present invention;
FIGs. 8A through 8E illustrate display states of a user interface in a text mode according to an embodiment of the present invention;
FIGs. 9A through 9F illustrate display states of a user interface in a photo mode according to the embodiment of the present invention;
FIGs. 10A and 10B illustrate display states of a user interface in a video mode according to an embodiment of the present invention;
FIGs. 11 A through 11M illustrate display states of a user interface in a camera mode according to an embodiment of the present invention;
FIGs. 12A through 12F illustrate display states of a user interface in a Universal Serial Bus (USB) host mode according to an embodiment of the present invention;
FIGs. 13A through 13F illustrate display states of a user interface in a setting mode according to an embodiment of the present invention;
FIG. 14 is a block diagram of an MP3 player according to an embodiment of the present invention;
FIG. 15 is a flowchart illustrating a method of providing a user interface in an MP3 player according to an embodiment of the present invention;
FIG. 16 is a flowchart illustrating a method of receiving a predetermined audio and recording the audio in a predetermined recording medium, in a digital audio recording/reproduction apparatus, according to an embodiment of the present invention;
FIG. 17 is a flowchart illustrating a method of recording a still image or video images in a predetermined recording medium, in a digital audio recording/reproduction apparatus, according to an embodiment of the present invention;
FIG. 18 is a flowchart illustrating a method of setting a data communication line between an external device and a digital audio recording/reproduction apparatus, according to an embodiment of the present invention; and
FIG. 19 is a flowchart illustrating a method of communicating by a communication line between an external device and a digital audio recording/reproduction apparatus according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

Hereinafter, an MP3 player is illustrated as an example of a digital audio recording/reproduction apparatus. However, the digital audio recording/reproduction apparatus, according to aspects of the present invention, is not required to be an MP3 player, and may instead be other devices capable of recording and reproducing digital audio files.

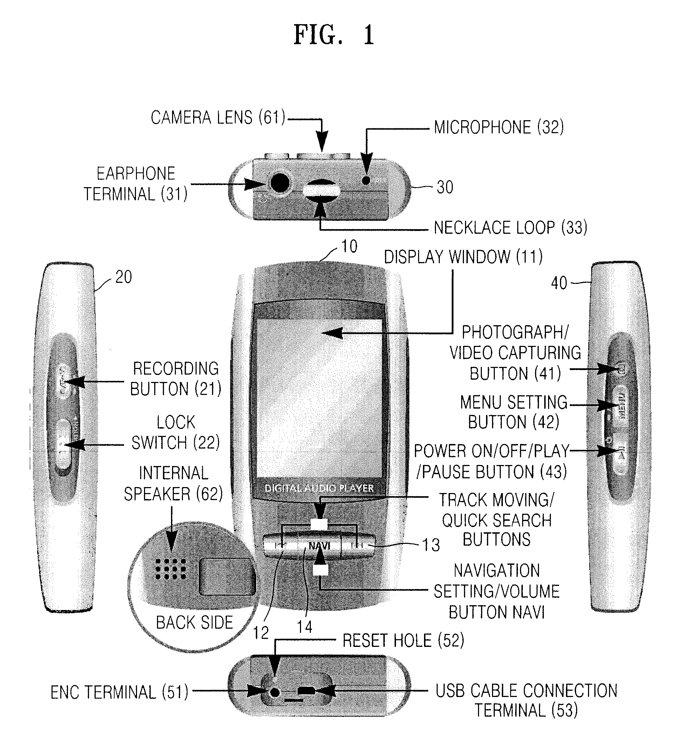

FIG. 1 illustrates an external appearance of an MP3 player 100 according to an example embodiment of the present invention. Referring to FIG. 1, a main body of the MP3 player 100 includes a display window 11, track moving/quick search buttons 12 and 13, and a navigation setting/volume button NAVI 14 on a front surface 10. The main body further includes a recording button 21 and a lock switch 22 on a left surface 20, and an earphone terminal 31, a microphone 32, and a necklace loop 33 on a top surface 30. Additionally, the main body includes a photograph/video capturing button 41, a menu setting button MENU 42, and a power on/off/play/pause button 43 on a right surface 40, and an ENC terminal 51, a RESET hole 52, and a Universal Serial Bus (USB) cable connection terminal 53 on a bottom surface 50. The main body also includes a camera lens 61 and an internal speaker 62 on a rear surface. It is understood that the location of these components may be different than the locations described above and shown in FIG. 1.

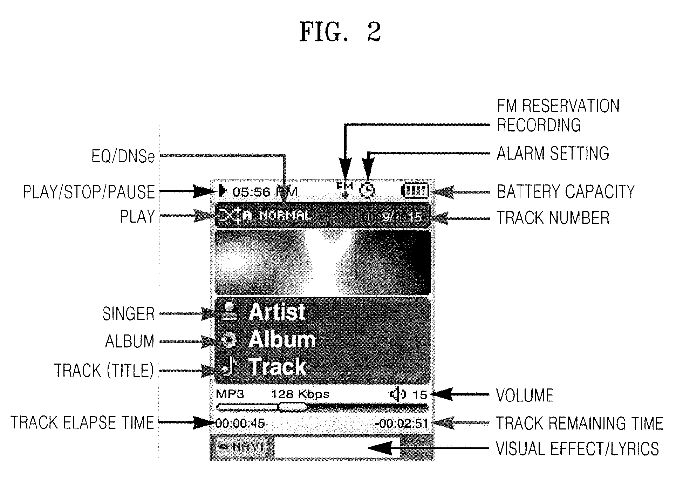

FIG. 2 illustrates an example display window 200 of the MP3 player 100 according to an embodiment of the present invention. Referring to FIG. 2, when the MP3 player 100 is in a music mode, a play/stop/pause mark, a current time, a Frequency Modulation (FM) reservation recording mark, an alarm setting mark, and a battery remaining amount mark are displayed in the first row of the display window 200, a play mode mark, an Equalizer/Digital Natural Sound engine (EQ/DNSe) mark, and a song number are displayed in the second row of the display window 200, and an image according to the reproduction of music is displayed below the second row of the display window 200. A singer name, an album name, and a track name (i.e., a song name) are displayed below the image. A track elapse time, a volume, and a track remaining time are displayed below the singer name, the album name, and the track name. A long navigation button press function as a user key to provide a visual effect and a setting of lyrics is displayed below the track elapse time, the volume, and the track remaining time. These icons may be displayed in configurations different than the configuration described above and shown in FIG. 2.

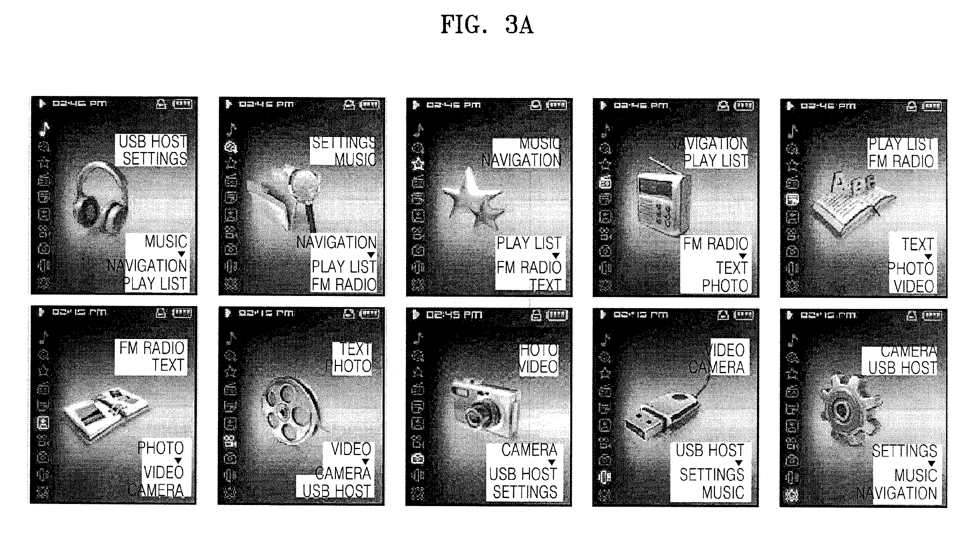

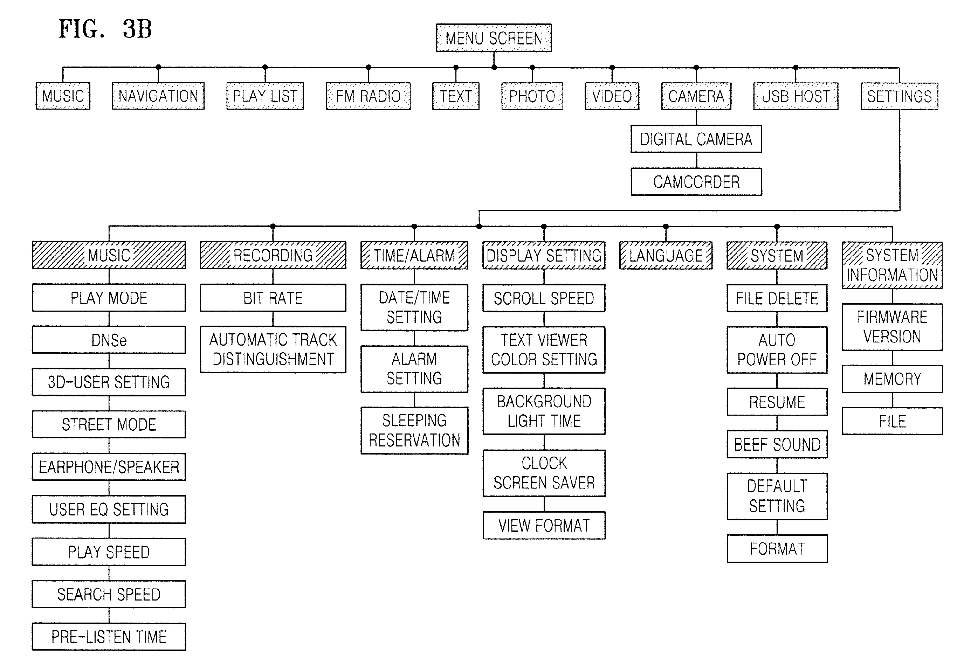

FIGS. 3A and 3B are diagrams to describe an operation mode of the MP3 player 100 according to an example embodiment of the present invention. Referring to FIGS. 3A and 3B, the operation mode of the MP3 player 100 includes:
1. A music mode used to check a currently reproduced song;
2. A navigation mode used to search music files, video files, photograph files, and text files;
3. A play list mode used to selectively play desired music files;
4. An FM radio mode used to listen to FM radio;
5. A text mode used to read a text file;
6. A photo mode used to view an image file;
7. A video mode used to view a video file;
8. A camera mode used to capture photographs or video images;
9. A host mode used to transmit a file stored in the main body to an external device or to transmit a file stored in the external device to the main body; and
10. A setting mode used to set various settings of the MP3 player 100. A detailed graphical representation of the setting mode according to an embodiment of the present invention is illustrated in FIG. 3B.

The MP3 player 100 according to an example embodiment of the present invention is configured so that when the menu button 42 shown in FIG. 1 is pressed for a relatively long time, the operation mode is displayed on a menu screen. After a menu is selected by moving the NAVI button 14 up or down and selecting the menu, either a sub-menu of the selected menu is displayed, or if no sub-menus exist, the selected menu is executed. If the menu button 42 is pressed for a relatively short time, the menu mode is released. Additionally, if the user does not enter a separate input command within a predetermined time of first displaying the menu mode, such as, for example, 1 minute, the menu is released.

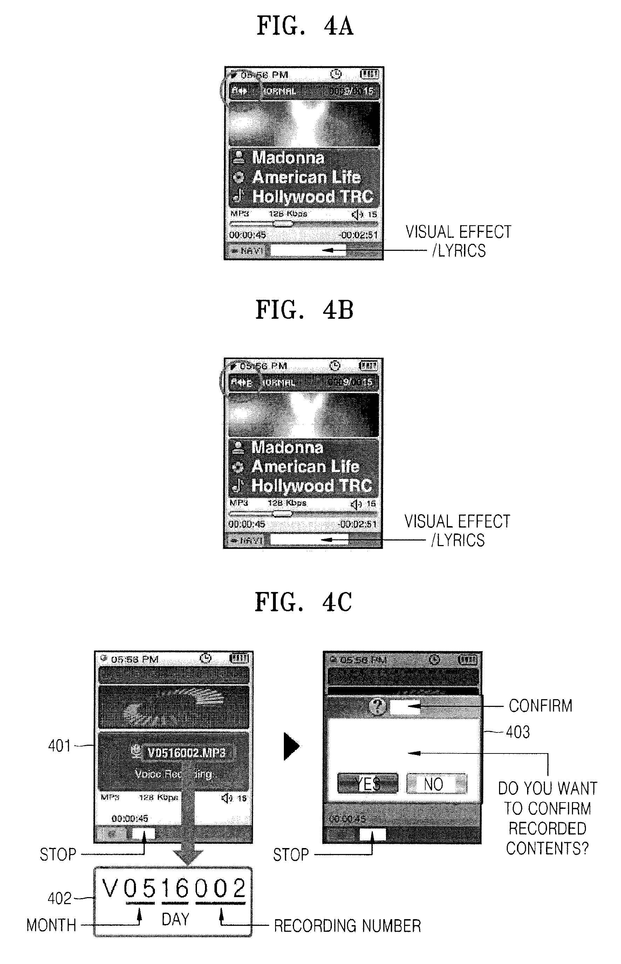

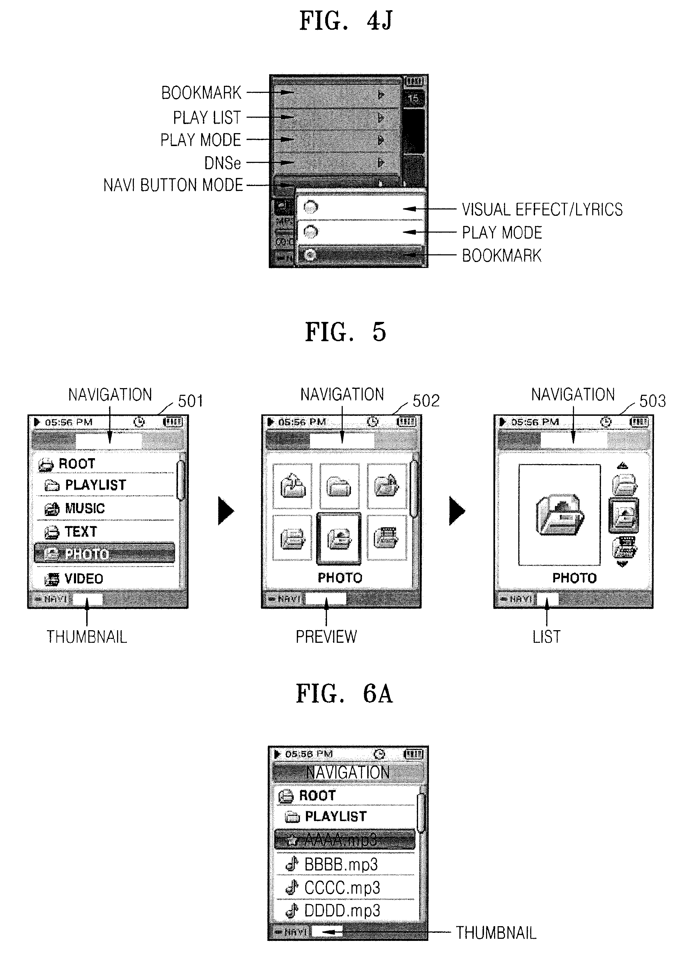

The operation mode of the MP3 player 100 will now be described in detail with reference to FIGS. 4A-4J, FIG. 5, FIGS. 6A-6B, FIGS. 7A-7H, FIGS. 8A-8E, FIGS. 9A-9F, FIGS. 10A-10B, FIGS. 11A-11M, FIGS. 12A-12F, and FIGS. 13A- 13F.

FIGS. 4A through 4J illustrate display states of a user interface in the music mode, according to an embodiment of the present invention. The MP3 player 100 according to an embodiment of the present invention can play many different types of music file formats, such as an MP3 format, a Windows Media Audio (WMA) format, an Audio Advanced Systems Format (ASF), an Ogg format, and other formats.

### (1) How to turn on or off power

In order to turn on the MP3 player 100, press the power button 43 illustrated in FIG. 1 for a relatively long time period. If the power button 43 of the main body is pressed during music playback, the music playback pauses, and then if no other buttons are pressed for a predetermined time, e.g., 1 minute, the MP3 player 100 turns off. A power-off time limit may be set in the menu. Additionally, if the power button 43 is pressed for a relatively long time during play, the MP3 player 100 is also turned off.

### (2) How to use a volume/lock function

The volume is controlled using the + and - buttons (up and down movement of the NAVI button 14) of the main body during music playback in a range between 00 and 40. If the lock switch 22 (FIG. 1) of the main body is pushed in the direction indicated by the arrow drawn on the main body, a lock function is set. Thereafter, even if any button is pressed during play, the button does not work. If the lock function is set, a 'lock' mark is displayed on the display window 11.

### (3) How to search for a desired music/speech file.

A desired file can be searched for during play by pressing either of the track moving/quick search buttons 12 and 13 for a relatively long time, and then, if the pressed button is released, the selected file is reproduced. If the right button 13 of the track moving/quick search buttons 12 and 13 is pressed for a relatively short time during play, a subsequent track is reproduced. If the left button 12 of the track moving/quick search buttons 12 and 13 is pressed for a relatively short time within 5 minutes after music playback begins, a previous track is reproduced, and if the left button 12 is pressed for a relatively short time after 5 minutes after music playback begins, the track currently being played starts over from the beginning. If one of the track moving/quick search buttons 12 or 13 is pressed left or right when no song is currently playing, a previous or subsequent track is selected, respectively, and is then ready to be played.

### (4) How to set a block repeat function

If the A↔B button 21 of the main body is pressed for a relatively short time in a first part of a block of music or speech files to be repeated during play, 'A↔' is displayed on the display window 11 as illustrated in FIG. 4A, and a block repeat start point is set. Then, if the A↔B button 21 is pressed again for a relatively short time , 'A↔B' is displayed on the display window 11, as illustrated in FIG. 4B, a block repeat end point is set, and music or speech files in the set block are repeatedly reproduced. After setting a block of music or speech files, if the A↔B button 21 is again pressed for a relatively short time, the block repeat function is released. Additionally, after setting a block of music or speech files, if movement to a previous or subsequent track or a quick search is performed using the track moving/quick search buttons 12 and 13, the block repeat function is automatically released.

### (5) How to record speech

If the recording button 21 of the main body is pressed for a relatively long time, a speech recording function begins, and a pop-up box 401 illustrated in FIG. 4C is displayed. Speech files are recorded in an order of 'V****001', 'V****002', etc., as illustrated by reference numeral 402 in FIG. 4C, wherein the first 4 digits of the 7 digits displayed in the pop-up box 401 indicate a recorded month and date, and the remaining 3 digits displayed in the pop-up box 401 indicate a recording number. If the recording button 21 is pressed a second time, the recording stops, a new speech file is created, and a confirm dialog box 403 is displayed. In the confirm dialog box 403, a user may select 'YES' or 'NO'. At this point, if a user selects 'YES', the new speech file is reproduced.

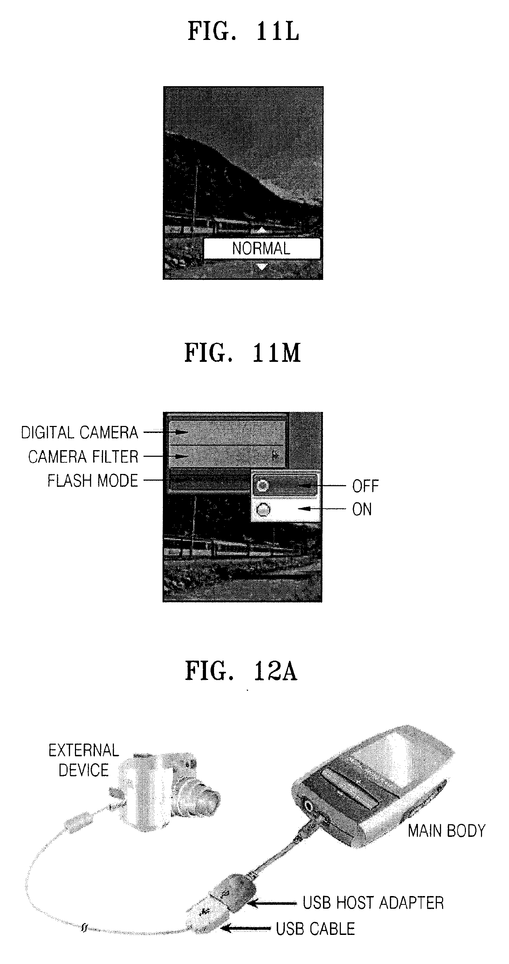

If a memory is full, the speech recording function automatically stops, and if a current mode is the FM radio mode, or if a line-in cable is connected between the MP3 player 100 and an external device 300 (FIG. 12A), the speech recording function does not work. In addition, if a memory is full, a bleep sound is not generated during recording.

### (6) How to record music reproduced by an external device

If an output terminal (or line-out terminal) of the external device and the ENC terminal 51 of the main body are connected to each other using a line-in cable, music to be recorded is reproduced by pressing a play button of the external device, and when the recording button 21 is pressed for a relatively long time, MP3 recording begins. If the pause button 43 is pressed during the MP3 recording, the MP3 recording pauses. At this point, if the play button 43 is pressed again, the MP3 recording continues. If the recording button 21 is pressed during the MP3 recording, the MP3 recording stops, and a music file is created. Music files are recorded in an order of 'L***001', 'L****002', etc., wherein the first 4 digits of the 7 digits indicate the month and year in which the music file is created, and the remaining 3 digits indicate a recording number. The created music file is stored as an MP3 file in a [RECORDED]→[LINE] folder. If 'YES' is pressed on the confirm dialog box 403 illustrated in FIG. 4C, the created music file is reproduced. A bit rate can be set within the range of 32 Kbps~1 92 Kbps, although the bit rate may also fall outside of this range. Additionally, if the line-in cable is removed during the MP3 recording, the MP3 recording stops.

### (7) How to use functions of the music mode

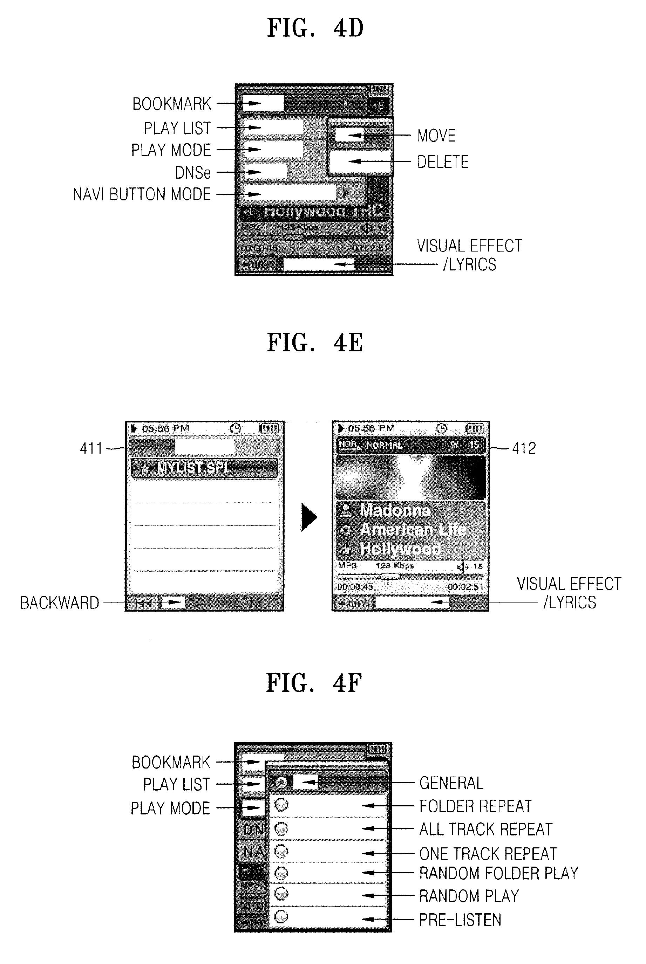

The MP3 player 100 according to an example embodiment of the present invention provides Bookmark, play list, play mode, DNSe, and NAVI button mode functions when used in the music mode, as illustrated in FIG. 4D. Movement or selection can be performed using the NAVI button 14 in the music mode, and if the left button 12 of the track moving/quick search buttons 12 and 13 is pressed, a previous screen is displayed.

1. Bookmark: Press the MENU button 42 for a relatively short time during music playback or when the music is stopped, move to a 'bookmark' item using the NAVI button 14, and press the NAVI button 14 again. Then, 'move' and 'delete' items are displayed. If the 'move' item is selected, movement to a relevant position can be performed by pressing the NAVI button 14 after moving to the desired bookmark position, and if the 'delete' item is selected, a desired bookmark is deleted by pressing the NAVI button 14 after moving to a desired bookmark position.

2. Play list: Press the MENU button 42 for a relatively short time during music playback or when the music is stopped, move to a 'play list' item using the NAVI button 14, and press the NAVI button 14 again. Then, a play list is displayed on a display window 411, as illustrated in FIG. 4E. If the NAVI button 14 is pressed after moving to a list of files that are to be reproduced, files in the selected play list are reproduced, as indicated by reference numeral 412 which is illustrated in FIG. 4E. A method of setting a play list will be described when "2. navigation mode" 10 is described.

3. Play mode: Press the MENU button 42 for a relatively short time during music playback or when the music is stopped, move to a 'play mode' item using the NAVI button 14, and press the NAVI button 14 again. Then, a play mode list is displayed on a display window, as illustrated in FIG. 4F. The 'play mode' item includes a 'general' item used to sequentially listen to stored files once, a 'folder repeat' item used to repeatedly listen to a currently playing folder, a 'total repeat' item used to repeatedly listen to all stored files, a 'single track repeat' used to repeatedly listen to only one file, a 'random folder play' item used to listen to files in a selected folder in a random order, a 'random play' item used to listen to all files in a random order, and a 'pre-listen' item used to listen to a beginning portion of each of the stored files for a pre-set time. A user can select the play mode by moving to a desired play mode item and pressing the NAVI button 14.

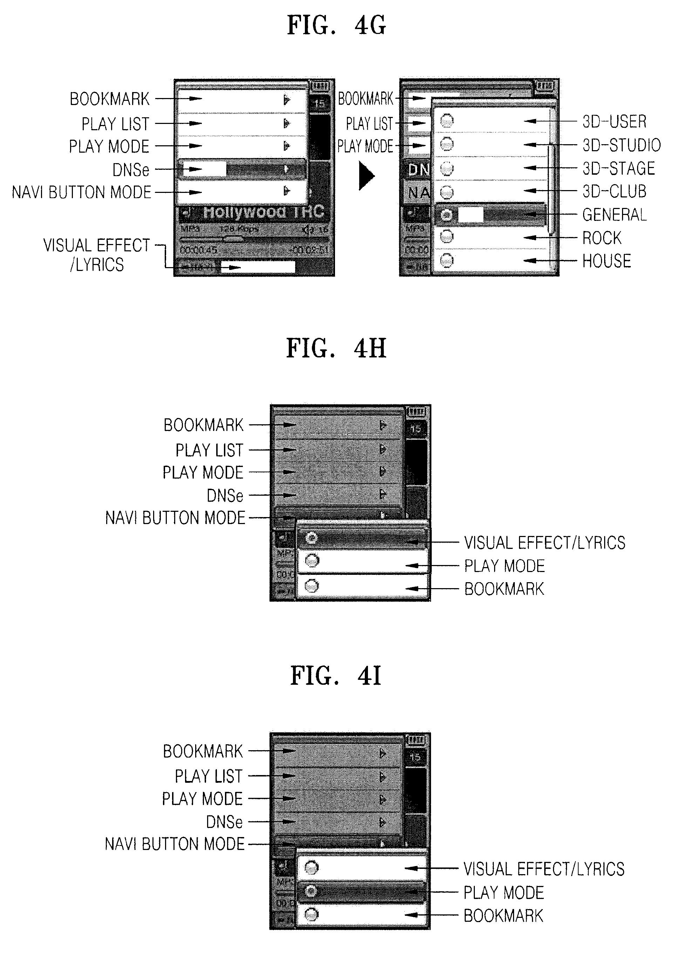

4. DNSe Mode: Press the MENU button 42 for a relatively short time during music playback or when the music is stopped, move to a 'DNSe' item using the NAVI button 14, and press the NAVI button 14 again. Then, a list is displayed on a display window, as illustrated in FIG. 4G. The list is preferably configured in the form of a daisy chain, such as '3D-user' →'3D-studio' → '3D-stage' → '3D-club' → 'general' → 'rock' → 'house' → 'dance' → 'jazz' → 'ballad' → 'R&B' → 'classic' → 'user EQ'.

The DNSe mode is a sound effect function developed by Samsung Electronics Co., and is designed to be used with MP3 players or other digital audio reproduction devices. The DNSe mode includes features modes such as 3D, bass enhance, and street modes. The 3D mode is used to add a stereo sound effect to music, and the bass enhance mode is used to strengthen the bass of music. The street mode allows a user to easily listen to the music in a noisy environment by using an automatic volume control effect which amplifies sounds having a low volume.

5. NAVI Button Mode: Press the MENU button 42 for a relatively short time during music playback or when music is stopped, move to a 'NAVI button mode' item using the NAVI button 14, and press the NAVI button 14 again. Then, 'visual effect/lyrics', 'play mode', and 'bookmark' items are displayed on a display window, as illustrated in FIG. 4H.

When the 'visual effect/lyrics' item is designated, every time the NAVI button 14 is pressed for a relatively long time during music playback or when the music is stopped, an effect screen is changed, e.g., 'effect screen 1' → 'effect screen 2' → 'effect screen 3' → 'EQ screen' → 'lyrics screen'. When the 'play mode' item is designated as illustrated in FIG. 41, every time the NAVI button 14 is pressed for a relatively long time during music playback or when the music is stopped, the play mode changes. When the 'bookmark' item is designated as illustrated in FIG. 4J, every time the NAVI button 14 is pressed for a relatively long time during music playback or when music is stopped, a current position in the music track is bookmarked. The letter "I" appears on the bookmarked point, and a desired position can be easily found later on by using the bookmark function.

FIG. 5 illustrates a display state of a user interface in the navigation mode according to an example embodiment of the present invention. Referring to FIG. 5, the navigation mode provides a function of easily searching a desired file. If the navigation mode is selected on a menu after pressing the NAVI button 14 for a relatively short time, or after pressing the MENU button 42 for a relatively long time, the navigation mode is provided as shown in a display window 501, which is illustrated in FIG. 5. If the left button 12 of the track moving/quick search buttons 12 and 13 is pressed, folders in a higher level appear, and if the right button 13 is pressed, folders in a lower level appear. If the - button is pressed, a cursor moves downward, and if the + button is pressed, the cursor moves upward. If the NAVI button 14 is pressed, the folders in the lower level appear, or a selected file is reproduced. A navigation list is provided with thumbnail images on a display window 502 illustrated in FIG. 5, or is provided with a preview image on a display window 503 illustrated in FIG. 5. A desired image can be easily located and viewed by selecting a 'thumbnail' or 'preview' item. Additionally, if the NAVI button 14 is pressed for a relatively long time, the navigation view format can be changed according to a predetermined order, such as 'list,' 'thumbnail,' and 'preview'. The order of this list may be changed.

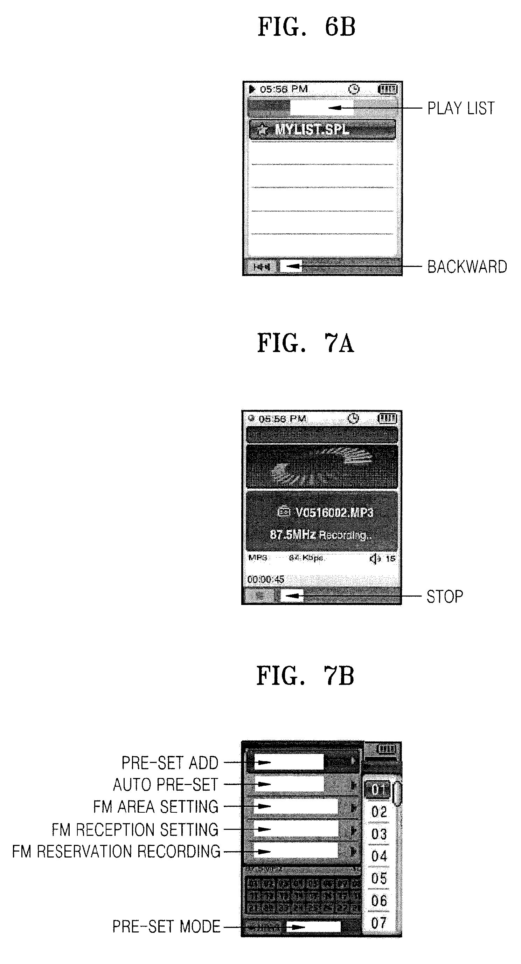

FIGS. 6A and 6B illustrate display states of a user interface in the play list mode according to an example embodiment of the present invention.

### (1) How to set a play list

Move to the navigation mode by pressing the NAVI button 14 for a relatively short time, move to a desired file, and press the A↔B button 21. When the A↔B button 21 is pressed, the selected file is marked and stored in [play list] → [MYLIST]. If the 'play list' item is selected after pressing the MENU button 42 in the music mode, a display window is displayed as illustrated in FIG. 6A, and a selected play list can be checked through [MYLIST]. In order to release the play list setting, the A↔B button 21 should be pressed again, after moving to a marked file in the navigation mode.

### (2) How to play a play list

The 'play list' item can be selected when the menu screen appears by pressing the MENU button 42 for a relatively long time. Alternatively, the 'play list' item can be selected by pressing the MENU button 42 for a relatively short time in the music mode. If the 'play list' item is selected, a set play list is displayed, as illustrated in FIG. 6B. A selected play list is then reproduced by pressing the NAVI button 14 after moving to a list of files that are to be reproduced.

FIGS. 7A through 7H illustrate display states of a user interface in the FM radio mode according to an example embodiment of the present invention.

### (1) How to listen to an FM radio program

If the NAVI button 14 is pressed after a user selects an 'FM radio' item on the menu screen, the user can listen to an FM radio program. If either of the track moving/quick search buttons 12 or 13 is pressed for a relatively short time, the MP3 player 100 manually searches through FM frequencies step by step, allowing a user to manually locate a desired frequency. If either of the track moving/quick search buttons 12 or 13 is pressed for a relatively long time, the MP3 player 100 automatically searches through FM frequencies.

### (2) How to record an FM radio program

If the recording button 21 is pressed for a relatively long time while listening to an FM radio program, the FM radio program which is currently being listened to is recorded, as illustrated in FIG. 7A. If the recording button 21 is pressed again, a file is created, and the recording stops. Files are created in an order of 'F****001', 'F****002', etc., and after recording, the created file is stored as an MP3 file in a [RECORDED] → [FM] folder. Also, if a user selects 'YES' on a confirm dialog box, the recorded file is reproduced. An FM radio program is preferably, although not necessarily, recorded at a bit rate of 64 Kbps.

### (3) How to use functions in the FM mode

If the MENU button 42 is pressed in the FM mode, 'pre-set add', 'auto pre-set', 'pre-set search', 'pre-set delete', 'FM area setting', 'FM reception setting', and 'FM reservation recording' items are provided.

1. Pre-set Add: As shown in FIG. 7B, if the NAVI button 14 is pressed after moving to the 'pre-set add' item, a receiving frequency is stored. A desired frequency can be manually stored, and the number of frequencies that can be designated is up to a predetermined number, such as 30. However, the number of frequencies which can be designated may also be greater than 30.

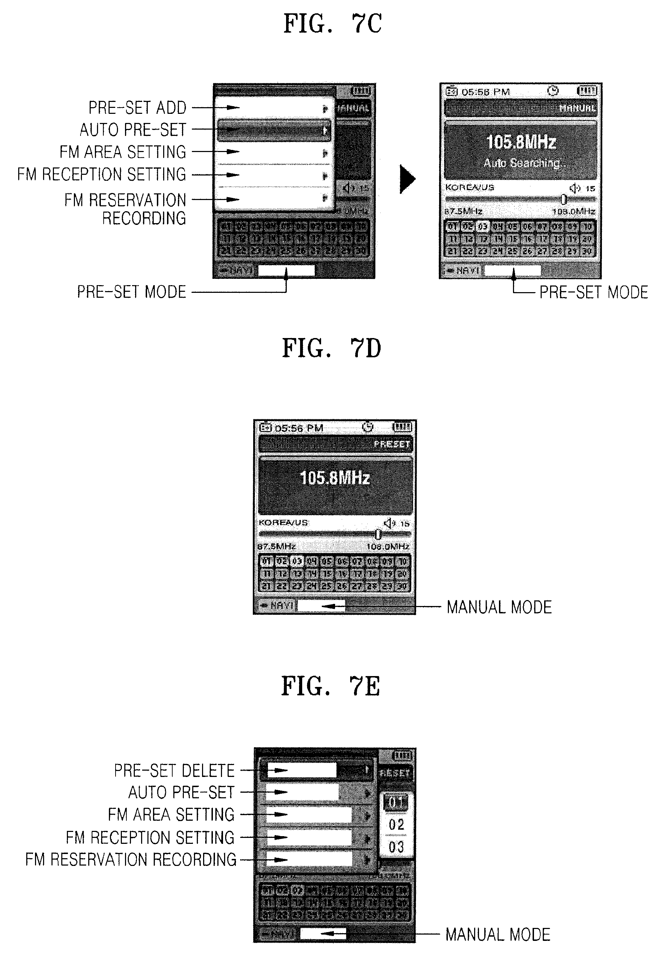

2. Auto Pre-set: As shown in FIG. 7C, if the NAVI button 14 is pressed after moving to the 'auto pre-set' item, a receiving frequency is automatically stored.

3. Pre-set Search: If the NAVI button 14 is pressed for a relatively long time in the FM mode, a pre-set mode is enabled as illustrated in FIG. 7D, and a desired pre-set number can be selected using the track moving/quick search buttons 12 and 13.

4. Pre-set Delete: If the NAVI button 14 is pressed after moving to the 'pre-set delete' item, the MP3 player 100 displays a display window, as illustrated in FIG. 7E. Then, if the NAVI button 14 is pressed after moving to a pre-set number which the user wants to delete, the stored pre-set number is deleted.

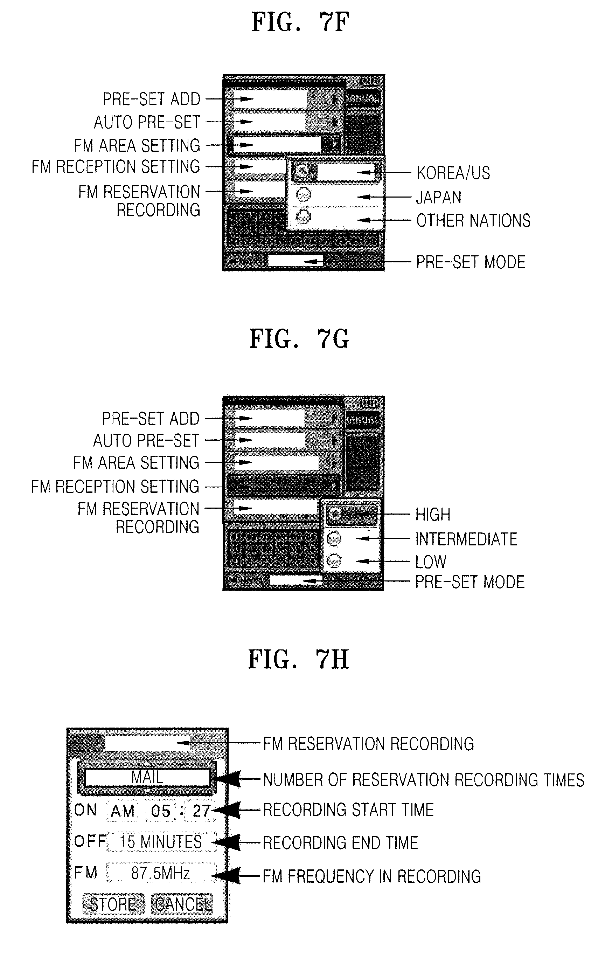

5. FM Area Setting: Press the NAVI button 14 after moving to the 'FM area setting' item, and then press the NAVI button 14 again after moving to a desired FM area. At this point, the MP3 player 100 displays a display window, as illustrated in FIG. 7F. In the Republic of South Korea and the United States, an FM frequency can be searched in units of 100 KHz in a range between 87.5 MHz and 108.0 MHz. In Japan, an FM frequency can be searched in units of 100 KHz in a range between 76.0 MHz and 108.0 MHz. In other nations, an FM frequency can be searched in units of 50 KHz in a range between 87.5 MHz and 108.0 MHz.

6. FM Reception Setting: Press the NAVI button 14 after moving to the 'FM reception setting' item, and then press the NAVI button 14 again after moving to a desired FM reception level (for example, a high, intermediate, or low level). At this point, the MP 3 player 100 displays a display window, as illustrated in FIG. 7G. If the FM reception level increases, more frequencies can be received.

7. FM Reservation Recording: Press the NAVI button 14 after moving to the 'FM reservation recording' item, and then the MP3 player 100 displays a display window, as illustrated in FIG. 7H. After a first item is set using the - and + buttons, if the right button 13 of the track moving/quick search buttons 12 and 13 is pressed, a subsequent item can be set. However, if 'CANCEL' is selected in the first item, the subsequent item cannot be set. After all the items are set, a 'store' button is selected, and the NAVI button 14 is pressed. A recording-reserved FM radio program may be recorded even in a power-off state. After completing the FM reservation recording, an FM reservation recording mark is displayed on a top portion of a screen in the display window 11.

FIGS. 8A through 8E illustrate display states of a user interface in the text mode according to an embodiment of the present invention. Although the following description refers to a .txt file, other types of text files may also be used in accordance with the invention. A text file having a txt extension, which has been edited using a personal computer (PC), can be read using a text viewer provided in the MP3 player 100 according to an example embodiment of the present invention.

### (1) How to view a text file

If the text mode is selected after moving to the menu screen by pressing the MENU button 42 for a relatively long time, the MP3 player 100 displays the menu screen (referred to as 801), and then displays a text screen 802, as illustrated in FIG. 8A.

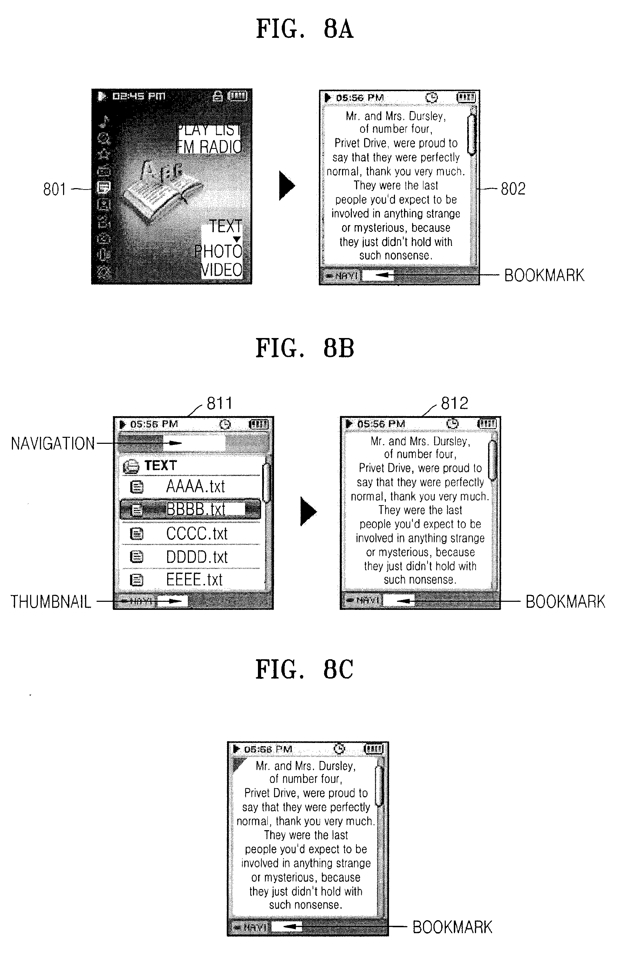

If the NAVI button 14 is pressed for a relatively short time, the MP3 player 100 displays a text selection screen 811, as illustrated in FIG. 8B. Then, if the NAVI button 14 is again pressed after moving to a desired text file, a selected text file is displayed on a text view screen 812, as illustrated in FIG. 8B. A text file can be viewed while playing music. The volume of the music is controlled using the - and + buttons, and a previous or subsequent page is viewed by pressing one of the track moving/quick search buttons 12 or 13, respectively. If the MENU button 42 is pressed for a relatively long time, the menu screen appears.

### (2) How to use functions in the test mode

1. Bookmark Function Setting: Press the NAVI button 14 for a relatively long time while reading a text file, and then a bookmark is set on a current page, as illustrated in FIG. 8C.

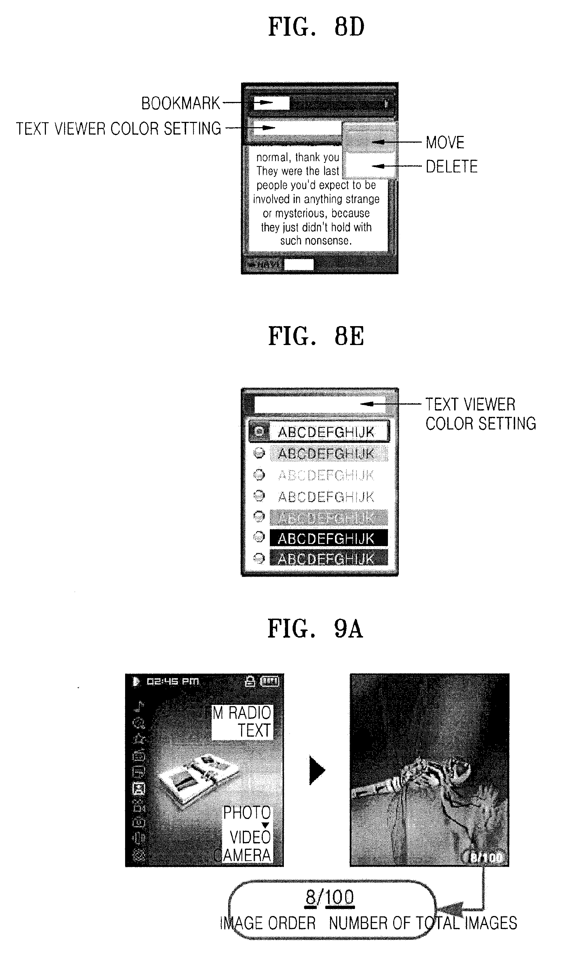

2. Bookmark Move/Delete: Press the MENU button 42 while reading a text file, move to the 'bookmark' item, and press the NAVI button 14. The MP3 player 100 will then display a screen, as illustrated in FIG. 8D. After moving to a 'move' or 'delete' item, press the NAVI button 14. If the 'move' item is selected, a portion of the text file, corresponding to the bookmark set in the text file, appears on the screen, and if the 'delete' item is selected, the bookmark set in the text file is deleted.

3. Text Viewer Color Setting: Press the MENU button 42 while reading a text file, move to the 'text viewer color setting' item, and press the NAVI button 14. The MP3 player 100 will then display a screen, as illustrated in FIG. 8E. Press the NAVI button 14 after moving to a desired color of the text viewer in order to view the text file in the selected color.

FIGS. 9A through 9F illustrate display states of a user interface in the photo mode according to an embodiment of the present invention. After moving to the menu screen by pressing the MENU button 42 for a relatively long time, if the photo mode (or still image output mode) is selected on the menu screen, the MP3 player 100 displays an image screen, as illustrated in FIG. 9A. Also, as shown in FIG. 9A, a number located at the bottom of the image screen indicates which numbered image is currently displayed among all the stored images, e.g., 8/100. Additionally, the terms "capture" and "record" are used interchangeably throughout the following descriptions.

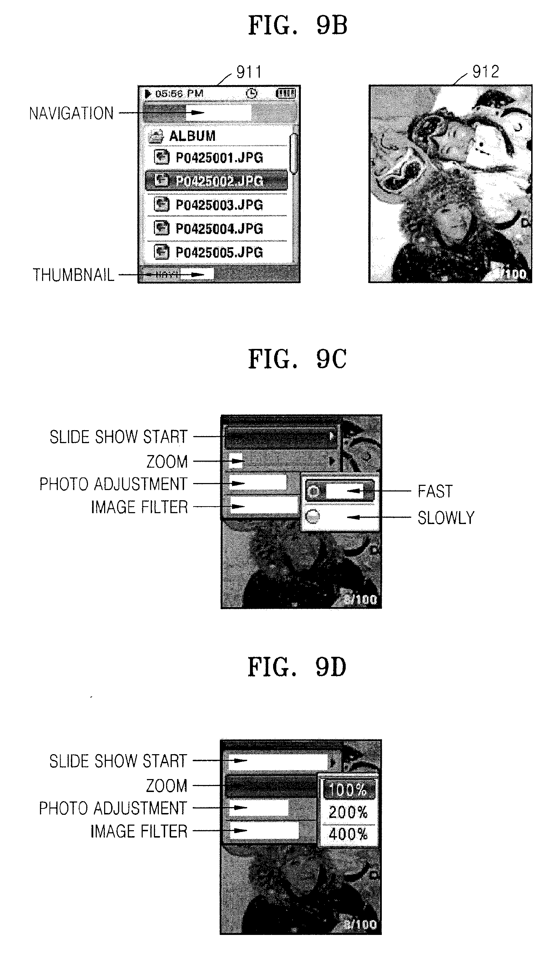

If the NAVI button 14 is pressed for a relatively short time, the MP3 player 100 displays an image selection screen 911, as illustrated in FIG. 9B. After moving to a desired file on the image selection screen 911, if the NAVI button 14 is pressed, the MP3 player 100 displays a screen 912, as illustrated in FIG. 9B. An image can be viewed while playing music. As described above, the volume of the music is controlled using the - and + buttons, and a previous or subsequent image is viewed by pressing one of the track moving/quick search buttons 12 or 13, respectively. If the MENU button 42 is pressed for a relatively long time, the menu screen appears.

Major functions in the photo mode include a 'slide show start' function, a 'zoom' function, a 'photo adjust' function, and an 'image filter' function. If the MENU button 42 is pressed while viewing an image, the MP3 player 100 displays the function items, and if the NAVI button 14 is pressed after moving to an item, the function corresponding to the selected item is executed.

1. Slide Show Start: Move to a 'slide show start' item and press the NAVI button 14. The MP3 player 100 then displays a screen, as illustrated in FIG. 9C. In order to vary the speed at which the slide show is viewed, move to a 'fast' or 'slow' item and press the NAVI button 14. A slide show of stored files can then be viewed quickly or slowly.

2. Zoom: Move to a 'zoom' item and press the NAVI button 14. Then, the MP3 player 100 displays the screen illustrated in FIG. 9D. Move to a desired magnification size and press the NAVI button 14. Here, 100% denotes an image size matching the screen size, 200% denotes an image size double the size of the screen, and 400% denotes an image size 4-times the size of the screen. If a magnified image is greater than a screen size, the magnified image can be scrolled through the screen by using the - button, the + button, and the track moving/quick search buttons 12 and 13 to move down, up, left, and right.

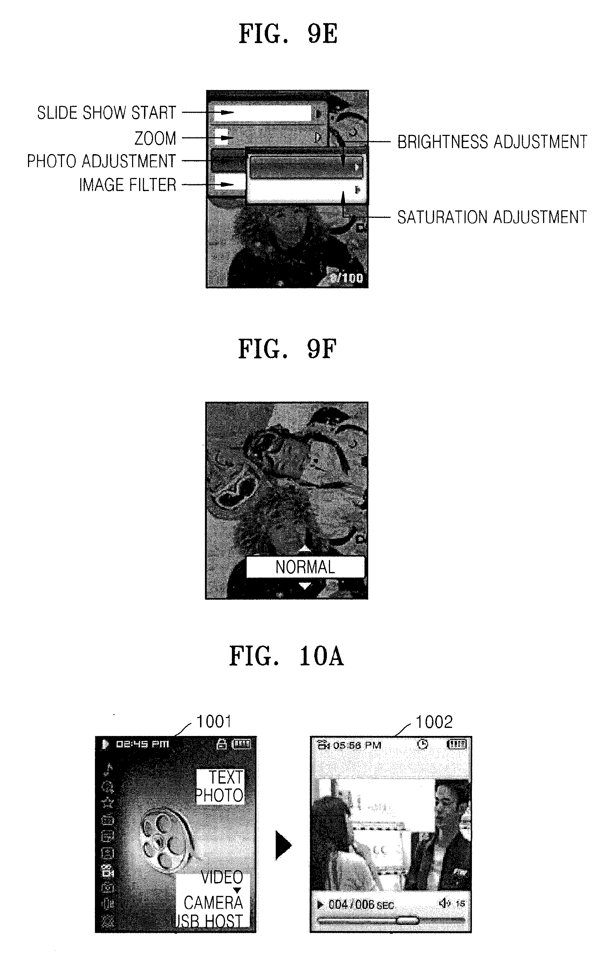

3. Photo Adjust: Move to a 'photo adjust' item and press the NAVI button 14. The MP3 player 100 then displays the screen illustrated in FIG. 9E. Move to a desired screen adjustment item and press the NAVI button 14. Screen brightness can be adjusted in a range, such as a range of -4 to +4, by pressing a brightness adjustment item, and screen saturation can be adjusted in a range, such a range of-4 to +4, using a saturation adjustment item. If the NAVI button 14 is pressed after completing the photo adjustment, a new image file is created.

4. Image Filter: Move to an 'image filter' item and press the NAVI button 14. The MP3 player 100 then displays the screen illustrated in FIG. 9F. The image filter function is preferably displayed in a daisy chain configuration, such as 'normal' →'clear' → 'sepia' → 'emboss' → 'vague' → 'asphalt' → 'watercolor' →'charcoal'. If a desired image filter is selected, a new image file, to which the selected image filter is applied, is created based on the old image file.

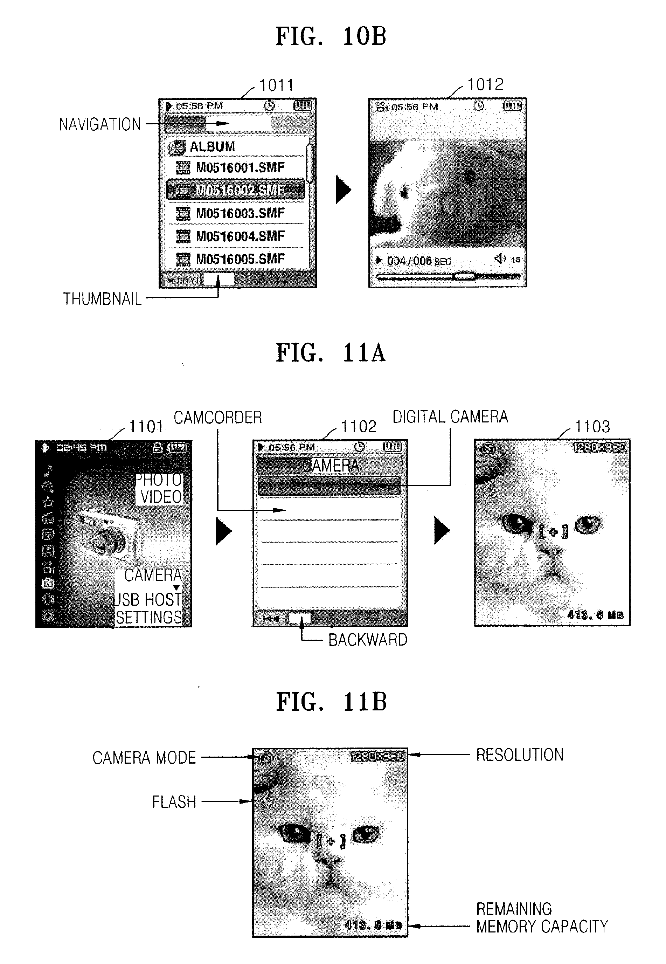

FIGS. 10A and 10B illustrate display states of a user interface in the video mode according to an example embodiment of the present invention. After moving to the menu screen by pressing the MENU button 42 for a relatively long time, if the video mode is selected on the menu screen (referred to as 1001 of FIG. 10A), the MP3 player 100 displays the video screen 1002 illustrated in FIG. 10A. If the NAVI button 14 is then pressed for a relatively short time, the MP3 player 100 displays the video selection screen 1011 illustrated in FIG. 10B. If the NAVI button 14 is then pressed after moving to a desired file, the MP3 player 100 reproduces the selected video file on the video play screen 1012, as illustrated in FIG. 10B.

As described above, the volume is controlled using the - and + buttons, and a previous or subsequent video file is viewed by pressing the track moving/quick search buttons 12 or 13, respectively, for a relatively short period of time. Also, a quick search function is performed by pressing the track moving/quick search buttons 12 and 13 for a relatively long period of time. If the MENU button 42 is pressed for a relatively short time, a playtime, a total time, and a volume level can be checked. If the MENU button 42 is pressed for a relatively long time, the menu screen appears.

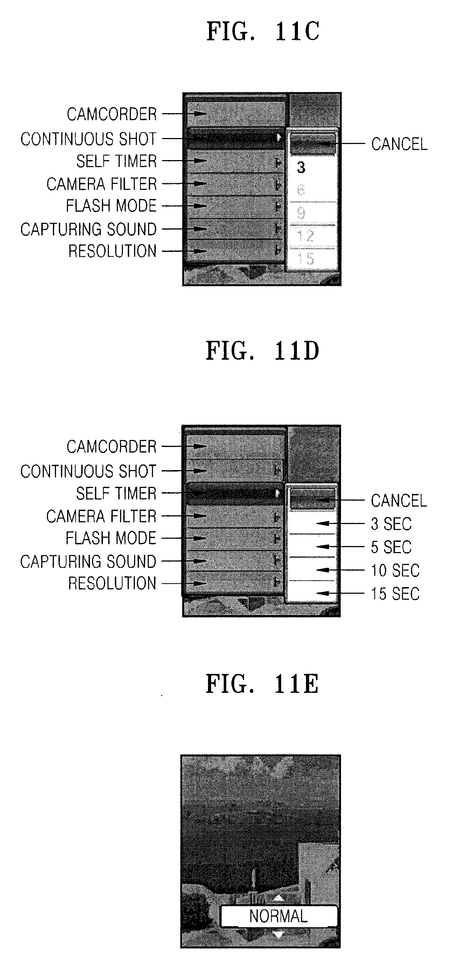

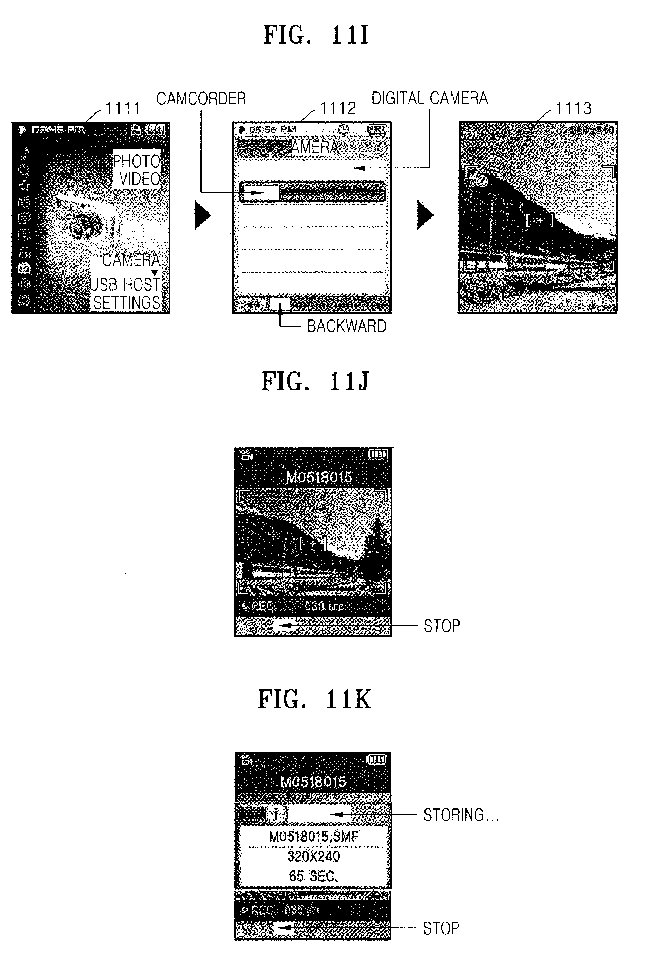

FIGS. 11A through 11 M illustrate display states of a user interface in the camera mode according to an example embodiment of the present invention. The camera mode includes a digital camera mode (or a still image capturing mode) to capture a still image, and a camcorder mode (or a video capturing mode) to capture video images. The digital camera mode will now be described first.

### (1) Digital Camera Mode:

As illustrated in FIG. 11A, after moving to the menu screen by pressing the MENU button 42 for a relatively long time, if the camera mode is selected on the menu screen (referred to as 1101), the MP3 player 100 displays a screen 1102. If the digital camera mode is selected on the screen 1102, the MP3 player 100 displays a capturing standby screen 1103. If the photograph/video capturing button 41 located on the main body is pressed for a relatively long time, the MP3 player 100 also displays the capturing standby screen 1103.

A target to be captured is focused as illustrated in FIG. 11 B. On the capturing standby screen illustrated in FIG. 11 B, 'camera mode', 'flash', 'resolution', and 'remaining capacity' are displayed. The zoom function can be controlled using the - and + buttons, and screen brightness can be controlled using the track moving/quick search buttons 12 and 13. If the photograph/video capturing button 41 is pressed, a photograph is taken, and the captured photograph is stored in a [PHOTO] → [ALBUM] folder.

Major functions in the digital camera mode include a 'camcorder mode' function, a 'continuous shot' function, a 'self-timer' function, a 'camera filter' function, a 'flash mode' function, a 'capturing sound' function, and a 'resolution' function. In the digital camera mode, if the MENU button 42 is pressed, the MP3 player 100 displays the function items, and if the NAVI button 14 is pressed after moving to an item, the function corresponding to the selected item is executed.

1. Change To Camcorder Mode: Besides using the menu button 42, if the NAVI button 14 is pressed for a relatively long time in the digital camera mode, the digital camera mode is changed to the camcorder mode.

2. Continuous Shot: Move to a 'continuous shot' item and press the NAVI button 14. The MP3 player 100 displays the screen illustrated in FIG. 11 C. Then, move to the number of photographs which the user wants to be continuously taken, and press the NAVI button 14. The MP3 player 100 will display a capturing standby screen. Press the photograph/video capturing button 41 on the capturing standby screen, and then a set number of photographs will be continuously captured. The number of photographs that can be continuously taken varies according to a either a predetermined resolution or a resolution set by a user.

3. Self-Timer: Move to a 'self-timer' item and press the NAVI button 14. The MP3 player 100 then displays the screen illustrated in FIG. 11 D. Move to a desired timer value and press the NAVI button 14. The self-timer can be set to various predetermined times, such as, for example, 3 sec, 5 sec, 10 sec, or 15 sec. For convenience of use, after capturing an image once, the self-timer may be set to turn off.

4. Camera Filter: Move to a 'camera filter' item and press the NAVI button 14. The MP3 player 100 then displays a screen as illustrated in FIG. 11E. Move to a desired camera filter and press the NAVI button 14. The camera filter function includes 'normal', 'gray', 'negative', 'sepia', 'emboss', 'sketch', 'vague', and 'clear' functions.

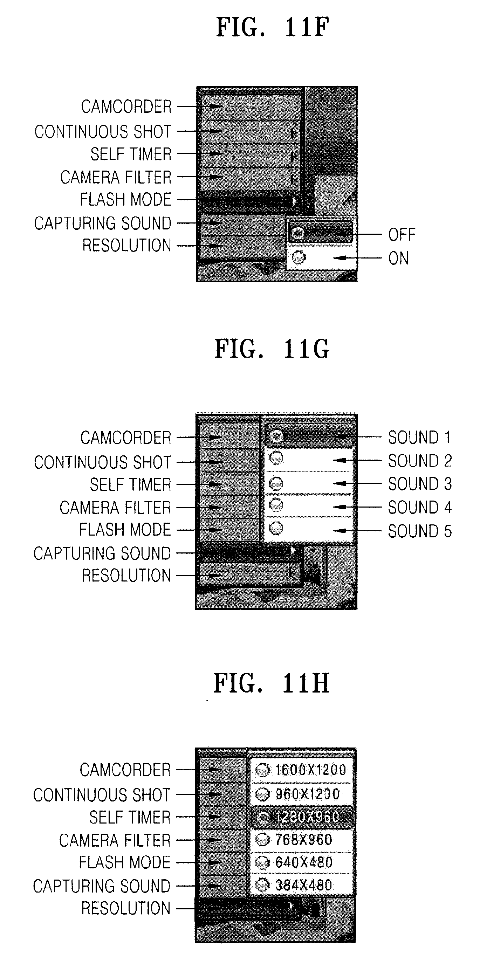

5. Flash Mode: Move to a 'flash mode' item and press the NAVI button 14. The MP3 player 100 then displays a screen as illustrated in FIG. 11 F. Move to an 'off' or 'on' item and press the NAVI button 14. If the 'off' item is selected, a flash is turned off. If the 'on' item is selected, the flash is turned on.

6. Capturing Sound: Move to a 'capturing sound' item and press the NAVI button 14. The MP3 player 100 then displays the screen as illustrated in FIG. 11G. The capturing sound can be set over a range of levels, for instance, from level 1 to level 5, and after moving to a desired capturing sound, the NAVI button 14 may be pressed to set the desired sound level.

7. Resolution: Move to a 'resolution' item and press the NAVI button 14. The MP3 player 100 displays the screen illustrated in FIG. 11 H. The resolution of a photograph can be set to various resolutions, such as 1600x1200, 960x1200, 1600x1200, 1280x960, 768x960, 640x480, or 384x480. Move to a desired resolution value and press the NAVI button 14 to set the desired resolution value. As the set resolution value increases, the file size corresponding to the captured photograph increases. The camcorder mode will now be described.

### (2) Camcorder mode

As illustrated in FIG. 11I, if the camera mode is selected on the menu screen 1111, the MP3 player 100 displays a screen 1112, and if the NAVI button 14 is pressed after the camcorder mode is selected on the screen 1112, the MP3 player 100 displays a capturing standby screen 1113. If the photograph/video capturing button 41 of the main body is pressed, video images are recorded as illustrated in FIG. 11J. A zooming function is controlled using the - and + buttons, and the screen brightness is controlled using the track moving/quick search buttons 12 and 13. Once video capturing begins, if the photograph/video capturing button 41 is pressed again, the video capturing stops, and the captured video is stored as a file in a folder, such as the [VIDEO] → [ALBUM] folder illustrated in FIG. 11K. The saved video file is preferably, but not necessarily, a Standard MIDI file (SMF) file. If a file size increases beyond a predetermined size, e.g., beyond 4 MB, while the user is in the process of capturing video images, the camcorder may be programmed to stop automatically.

Major functions in the camcorder mode include a 'change to digital camera mode' function, a 'camera filter' function, and a 'flash mode' function. In the camcorder mode, if the MENU button 42 is pressed, the MP3 player 100 displays function items, and if the NAVI button 14 is pressed again after moving to an item, the function corresponding to the selected item is executed.

1. Digital Camera: Move to a 'digital camera' item and press the NAVI button 14. The camcorder mode then changes to the digital camera mode. Even when the NAVI button 14 is pressed for a relatively long time in the camcorder mode, the camcorder mode is changed to the digital camera mode.

2. Camera Filter: Move to a 'camera filter' item and press the NAVI button 14. The MP3 player 100 will then display the screen illustrated in FIG. 11 L . Move to a desired camera filter and press the NAVI button 14. The camera filter function includes 'normal', 'gray', 'negative', 'sepia', 'emboss', 'sketch', 'vague', and 'clear' functions. Move to a desired camera filter function and press the NAVI button 14, and then the selected camera filter function is executed.

3. Flash Mode: Move to a 'flash mode' item and press the NAVI button 14. The MP3 player 100 will then display the screen illustrated in FIG. 11 M. Move to an 'off' or 'on' item and press the NAVI button 14. If the 'off' item is selected, a flash is turned off, and if the 'on' item is selected, the flash is turned on.

FIGS. 12A through 12F illustrate display states of a user interface in the USB host mode according to an embodiment of the present invention.

### (1) How to connect to an external device 300

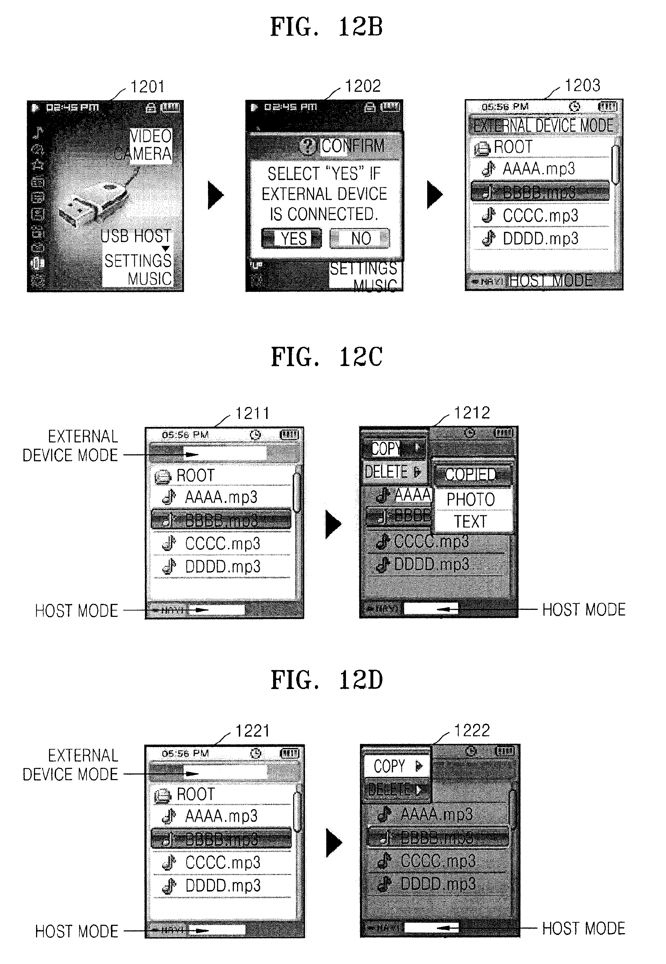

As illustrated in FIG. 12A, the main body of the MP3 player 100 is connected to a USB host adapter 302, the external device 300 is connected to the USB host adapter 302 using a USB cable 304, and the external device 300 is turned on. As illustrated in FIG. 12B, the menu screen (referred to as 1201) appears by pressing the MENU button 42 for a relatively long time, at which point a 'host' item may be selected by pressing the NAVI button 14. If the NAVI button 14 is pressed after moving to 'YES', an external device screen 1203 appears.

### (2) How to transmit a file of the external device to the main body

As illustrated in FIG. 12C, after moving to a file to be transmitted to the main body on an external device screen 1211, press the NAVI button 14. The - and + buttons allow a cursor to move downward and upward, and folders in a lower level can appear by using the right button 13 of the track moving/quick search buttons 12 and 13. A cursor movement method is used the same as in the USB host mode. If a pop-up window appears on a screen 1212, move to a 'copy' item, and press the NAVI button 14. If a folder from which files are copied is selected and the NAVI button 14 is pressed, the selected files are transmitted to the main body. The transmitted files can then be checked in a selected folder.

### (3) How to delete a file from the external device

As illustrated in FIG. 12D, after moving to a file that is to be deleted from an external device screen 1221, press the NAVI button 14. If a pop-up window appears on a screen 1222, move to a 'delete' item, and press the NAVI button 14. If a delete screen appears, move to 'YES', and press the NAVI button 14. The selected file will then be deleted.

### (4) How to transmit a file of the main body to the external device

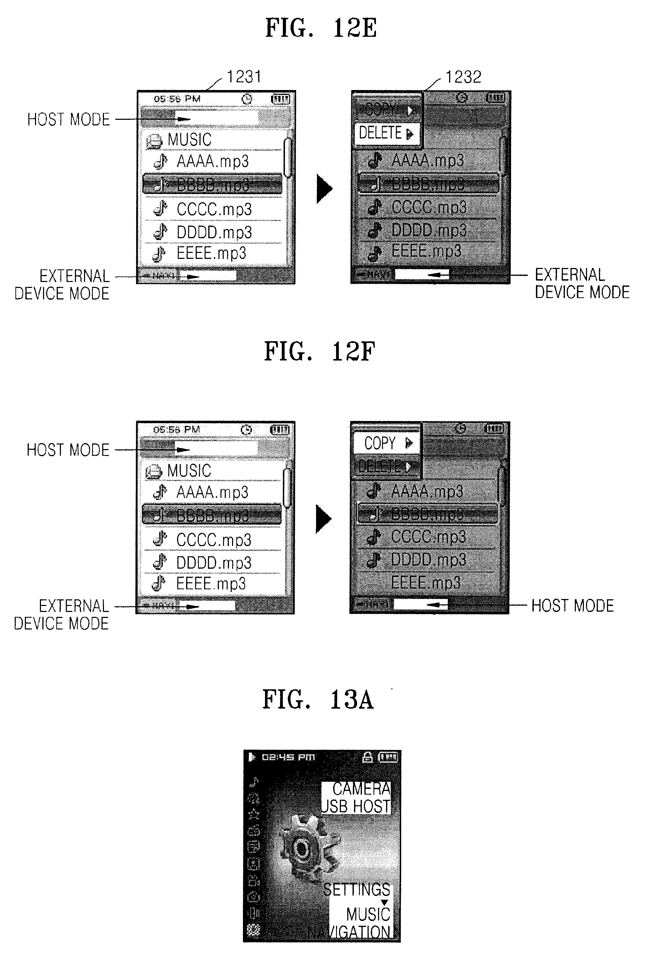

If an external device screen appears, press the NAVI button 14. Then, a navigation screen 1231 of the main body of the MP3 player 100 appears, as illustrated in FIG. 12E. Move to a file that is to be transmitted to the external device 300, and press the NAVI button 14. If a pop-up window appears on a screen 1232, move to a 'copy' item, and press the NAVI button 14. Then, the selected file is transmitted to the external device.

### (5) How to delete a file from the main body

Press the NAVI button 14 for a relatively long time on the external device screen. Then, a navigation screen 1241 of the main body appears as illustrated in FIG. 12F. Move to a file that is to be deleted and press the NAVI button 14. If a pop-up window appears on a screen 1242, move to a 'delete' item, and press the NAVI button 14. If a delete screen appears, move to 'YES', and press the NAVI button 14. Then, the selected file is deleted.

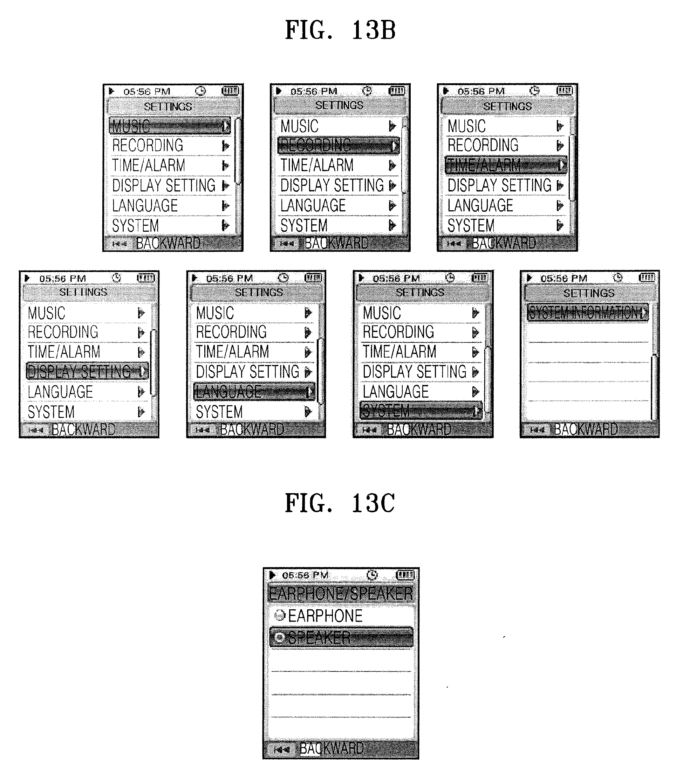

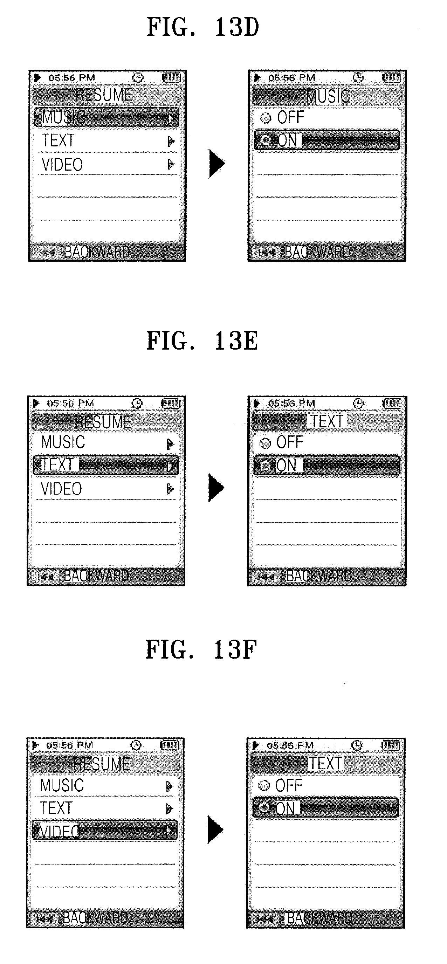

FIGS. 13A through 13F illustrate display states of a user interface in the setting mode according to an embodiment of the present invention. If a 'setting' item is selected on the menu screen illustrated in FIG. 13A, the MP3 player 100 displays the screen illustrated in FIG. 13B. Move to a function that is to be changed using the - and + buttons in the setting mode, and press the NAVI button 14. Then, a selected function is highlighted. Functions that can be changed in the setting mode are 'music', 'recording', 'time/alarm', 'screen display setting', 'language', 'system', and 'system information' functions.

Sub-function items of each function will be described with reference to FIG. 13B. In FIG. 13B, in a music setting mode, 'play mode', 'DNSe', '3D-user setting', 'street mode', 'earphone/speaker', 'user EQ setting', 'play speed', 'search speed', and 'pre-listen time' can be set. According to an embodiment of the present invention, since a user can listen to music by utilizing either an earphone or the internal speaker 62, 'earphone' or 'speaker' can be selected on an earphone/speaker setting screen, as illustrated in FIG. 13C.

In a recording setting mode, a 'bit rate' function and an 'automatic track distinguishment' function can be set. In a time/alarm setting mode, a 'date/time setting' function, an 'alarm setting' function, and a 'sleeping reservation' function can be set. In a screen display setting mode, a 'scroll speed' function, a 'text viewer color setting' function, a 'background light time' function, a 'clock screen saver' function, and a 'view format' function can be set.

In a language setting mode, a language, such as Korean, English, French, or German, that is to be displayed on a menu screen or a text screen, can be set. In a system setting mode, a 'file delete' function, an 'automatic power off' function, a 'resume' function, a 'bleep sound' function, a 'default setting' function, and a 'format' function can be set. In a system information setting mode, information on a firmware version, a memory, and files can be checked. As illustrated in FIGS. 13D through 13F, a resume mode can be set for music, text, and video. If 'resume off' is enabled, when music, text, or video is selected, the file most recently listened to or viewed is reproduced from the beginning of the file. If 'resume on' is enabled, when music, text, or video is selected, the file most recently listened to or viewed is reproduced from the position at which a user stopped listening to or viewing a file.

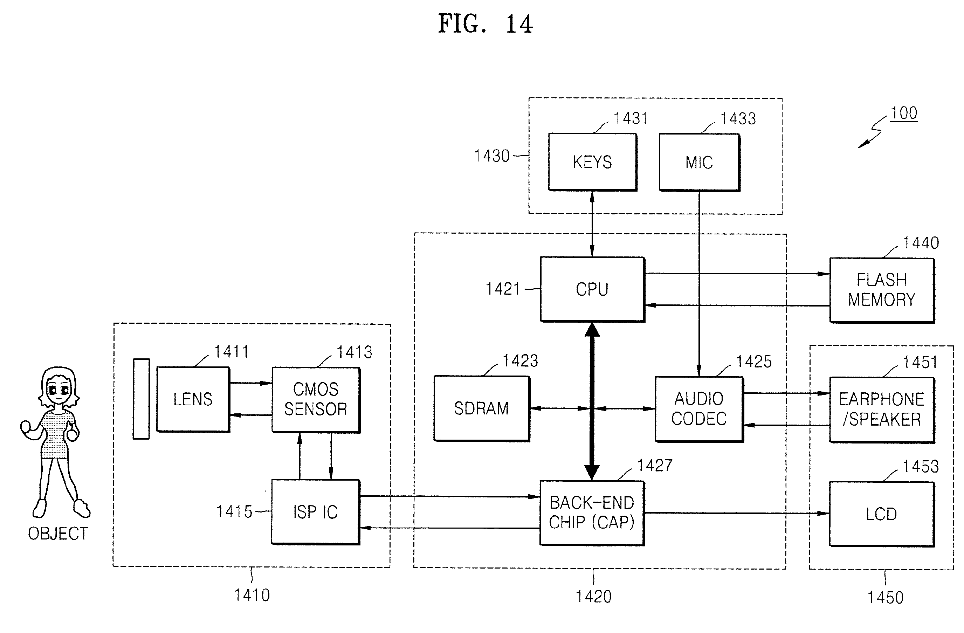

FIG. 14 is a block diagram of the MP3 player 100 to capture and record a still image and video images according to an example embodiment of the present invention. Referring to FIG. 14, the MP3 player 100 includes a camera module 1410, a controller 1420, an input unit 1430, a storage unit 1440, and an output unit 1450. The camera module 1410 includes a lens 1411, an image sensor 1413, and an Image Signal Processor Integrated Chip (ISP IC) 1415. The lens 1411 forms an image on a small image sensor by collecting light, and the image input through the lens 1411 is converted into an electrical signal by the image sensor 1413. The image sensor 1413 is a semiconductor element to convert an optical image into an electrical signal and corresponds to the film used in a conventional film camera. The image sensor 1413 can be implemented using various devices, such as a Charged Coupled Device (CCD) or a Complementary Metal Oxide Semiconductor (CMOS). In the embodiment described below, the image sensor 1413 is implemented as a CMOS sensor.

The ISP IC 1415 converts raw data received from the image sensor 1413 to YCbCr data so that a Camera Application Processor (CAP) can encode the image data. Although a basic function of the ISP IC 1415 is to convert the electrical signal generated by the image sensor 1413 into an image signal, the ISP IC 1415 also performs other functions required to ensure image quality. These functions include, but are not limited to, image effect functions such as Automatic Exposure/Auto White Balance (AE/AWB), color temperature detection, auto dead pixel alive, gamma correction, color correction, edge enhancement, linear image scaling, negative, sepia, and gray functions.

The controller 1420 provides a user interface to control the entire system of the MP3 player 100 and to provide a music playback function, a recording function, and a reproducing function of a still image and video images. In order to provide these functions, the controller 1420 includes a Central Processing Unit (CPU) 1421, a Synchronous Dynamic Random Access Memory (SDRAM) 1423, an audio codec 1425, and the CAP 1427 as a back-end chip.

The CPU 1421 controls the general operation of the MP3 player 100 and controls the CAP 1427. The SDRAM 1423 is a temporary storage space for programs and data. The audio codec 1425 encodes an analog audio signal into a digital audio signal, and conversely, decodes a digital audio signal to an analog audio signal. The CAP 1427 encodes the image signal received from the ISP IC 1415 to form a file for a still image, such as a Joint Photographic Experts Group (JPEG) file, or to form a file for video images, such as a Motion JPEG (MJPEG) file. The CAP 1427 also decodes a JPEG file or an MJPEG file, displays the decoded file on a Liquid Crystal Display (LCD) 1453, and controls the LCD 1453. The display 1453 is not limited to being an LCD screen.

The storage unit 1440 includes a memory, such as a flash memory, in which music files, photographs, text files, and video files are stored. The input unit 1430 includes key input buttons 1431 to perform playback and adjustment of a music file, to capture a still image or video images, to search a menu, and to activate a microphone 1433. The input unit 1430 may be configured in a shortcut key format in order to perform each of the above-described functions by pressing a single button. For instance, the functions of playing back and adjusting a music file, capturing a still image or video images, and search a menu may be performed by respectively pressing the NAVI button 14, the photograph/video capturing button 41, and the MENU button 42.

The output unit 1450 includes an earphone/speaker 1451 and an LCD 1453 to respectively output audio and video content to a user. The output unit outputs the user interface image provided by the controller 1420, and a music file and a video file stored in the storage unit 1440.

In the music play mode, the CPU 1421 reads file data stored in the flash memory 1440, temporarily stores the read file data in a buffer area of the SDRAM 1423, decodes the temporarily stored file data, converts the decoded file data to an audio signal using the audio codec 1425, and outputs the audio signal to the earphone or speaker 1451. Display information is displayed on the LCD 1453 via the CAP 1427.

In the camera mode, an image input through the lens 1411 is converted into an electrical signal by the image sensor 1413, converted into YCbCr image data by the ISP IC 1415, and displayed on the LCD 1453 via the CAP 1427. If a shutter key is pressed, the CPU 1421 transmits a capture command to the CAP 1427, the CAP 1427 creates a photograph file by compressing data received from the ISP IC 1415 to a JPEG file, and the created photograph file is stored in the flash memory 1440 by the CPU 1421.

A user interface operation performed by the controller 1420 will now be described. The controller 1420 provides a capturing standby screen, which is used to capture a still image and video images, to the output unit 1450. The controller 1420 additionally analyzes a user input signal which is input through the input unit 1430, and performs, based on the analyzed user input signal, either an operation to capture a still image, an operation to display an operation mode menu of still image capturing, an operation to display an operation menu including the camera mode in which the still image and video capturing function is displayed, or an operation to display a captured photograph list. After performing the selected operation, the controller 1420 displays the operation result to the output unit 1450. According to an embodiment, user input signals vary according to the kind of button inputs pressed by the user and the length of time the user presses each button input.

For example, the still image capturing function of the MP3 player 100 may be activated by pressing the photograph/video capturing button 41, the operation mode menu of the still image capturing may be displayed by pressing the MENU button 42, the operation menu, including the camera mode which provides the still image and video capturing function, may be displayed by pressing the MENU button 42 for a relatively long time, and the captured photograph list may be displayed by pressing the NAVI button 14.

In order to display the operation mode menu corresponding to the still image capturing function, the controller 1420 can provide, through the output unit 1450, the operation mode menu which includes a video capturing mode to capture video, a continuous shot mode to continuously capture still images a predetermined number of times, a timer mode to automatically capture a still image after a predetermined time elapses, a camera filter mode to add an effect to a still image, a flash mode to activate the flash function, a capturing sound setting mode to control a sound generated when capturing of an image is performed by the digital camera, and a resolution setting mode to set the resolution of a still image.

The operation menu provided by the controller 1420 may further include the music mode used to check a currently reproduced track, the navigation mode used to search music and video, a photograph, or a text file which the user wants to reproduce. The operation menu provided by the controller 1420 may also include the play list mode used to selectively play desired tracks, the FM radio mode used to listen to FM radio, the text mode used to read a text file, the photo mode used to view an image file, the video mode used to view a video file, the USB host mode used to transmit a file stored in the main body to an external device or to transmit a file stored in the external device to the main body, and the setting mode used to set settings of the digital audio recording/reproduction apparatus.

In order to display the operation menu, the controller 1420 analyzes a selection signal of an operation mode included in the operation menu, which is input through the user interface by the user, and controls the output unit 1450 based on the analyzed selection signal, so that the operation mode appears. In order to display a captured photograph list, the controller 1420 analyzes a selection signal of a file included in the captured photograph list, which is input through the input unit 1430 by the user, and controls the output unit 1450 based on the analyzed selection signal so as to change the photo mode.

The controller 1420 can display, through the output unit 1450, an operation mode menu of the photo mode, which includes a slide show mode used to show stored images as a slide show, a zoom mode used to magnify a stored image, a photo adjustment mode used to adjust brightness of a screen on which a still image is displayed, and an image filter mode used to add an effect to a still image.

The digital audio recording/reproduction apparatus according to an embodiment of the present invention, which has been described using an MP3 player as an example, is not limited to being an MP3 player. Additionally, although not shown, the digital audio recording/reproduction apparatus may further include a tuner unit to receive public radio broadcasting, and a communication port and communication interface to communicate with an external device. Thus, the digital audio recording/reproduction apparatus according to an embodiment of the present invention may receive and store a public radio broadcasting program and transmit and receive a file by communicating with the external device.

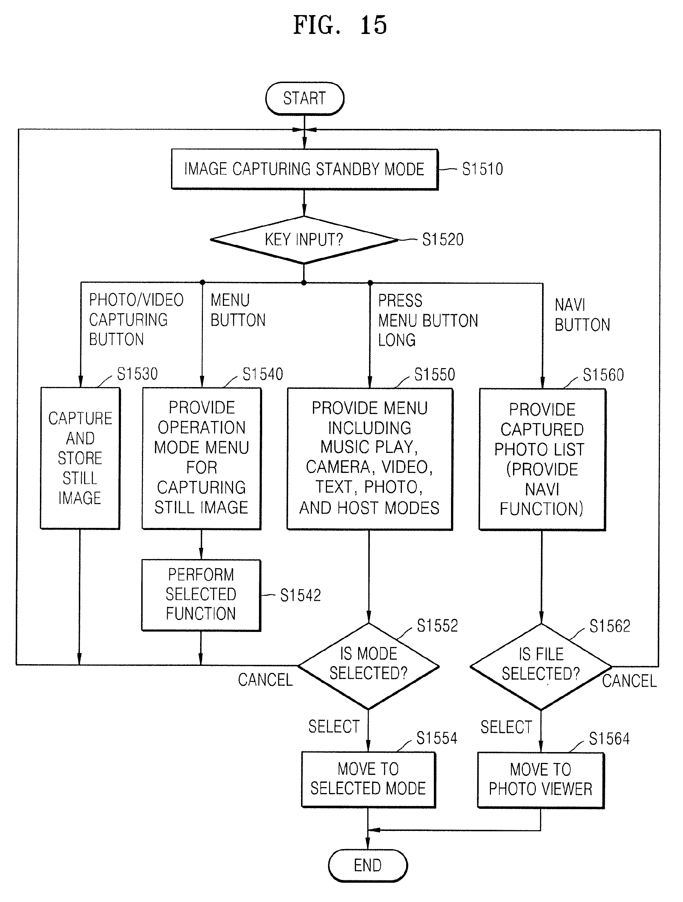

FIG. 15 is a flowchart illustrating a method of providing a user interface in the MP3 player 100 according to an example embodiment of the present invention.

Referring to FIG. 15, in the capturing standby mode to capture images including still images and video images, the MP3 player 100 displays a capturing standby screen in operation S1510. A user input signal input through the user interface is analyzed in operation S1520. As described above, the user input signals vary according to the kind of buttons pressed by the user and the length of time the user presses each button.

A user may capture still images by pressing the photograph/video capturing button 41, and the captured still image may be stored in operation S1530. An operation mode menu of the still image capturing may be displayed by pressing the MENU button 42, in operation S1540. An operation menu, which includes the camera mode to provide the still image and the video capturing function, may be displayed by pressing the MENU button 42 for a relatively long time, in operation S1550. A captured photograph list may be displayed by pressing the NAVI button 14, in operation S1560.

If an operation mode is selected from the operation mode menu of the still image capturing in operation SI540, the function selected by the user is executed in operation S1542. In operation S1550, the operation menu may further include the music mode, navigation mode, play list mode, FM radio mode, text mode, photo mode, video mode, USB host mode, and setting mode. After providing the operation menu, if a user selects an operation mode in operation S1552, a selection signal of the operation mode included in the operation menu, which is input through the user interface, is analyzed, and an operation mode based on the analyzed selection signal is activated in operation S1554.

After providing the captured photograph list in operation S1560, if the user selects a file included in the photograph list in operation S1562, a selection signal of the file included in the photograph list, which is input through the user interface, is analyzed, and the photo mode based on the analyzed selection signal is activated in operation S1564.

A method of recording an audio or speech signal in the storage unit 1440 of the digital audio recording/reproduction apparatus, according to an embodiment of the present invention, will now be described. The method of recording an audio or speech signal includes setting a file name of the audio or speech signal, wherein the file name of the audio or speech signal is automatically set by setting a recording date and a recording number as a serial number. More specifically, as described above in (5) How to record speech and (6) How to record music reproduced by an external device and illustrated in FIG. 4C, the file name of the audio or speech signal may be automatically set by setting a recording date and a recording number as a serial number in an order of 'V****001', 'V****002', etc., or 'L****001', 'L****002', etc.

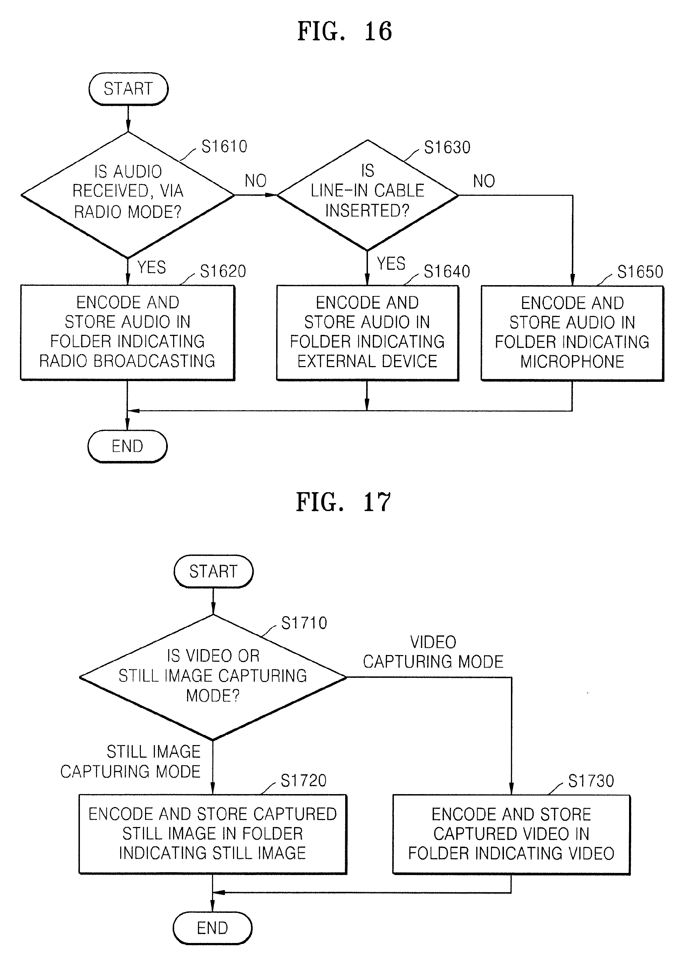

FIG. 16 is a flowchart illustrating a method of receiving predetermined audio from a sound source and recording the audio in a predetermined recording medium in a digital audio recording/reproduction apparatus according to an example embodiment of the present invention. Referring to FIG. 16, a receiving path of the predetermined audio is determined. Specifically, the digital audio recording/reproduction apparatus determines whether the predetermined audio is received by a line-in cable connecting the digital audio recording/reproduction apparatus to an output of an external sound device, public radio broadcasting, or by a microphone. The received audio is stored in a separate storage space, e.g., a folder, according to the determined receiving path. In order to perform the above process, the digital audio recording/reproduction apparatus determines in operation S1610 whether a current mode is the FM radio mode to receive public radio broadcasting. If the digital audio recording/reproduction apparatus determines in operation S1610 that the current mode is the FM radio mode, the digital audio recording/reproduction apparatus encodes a radio broadcasting program received in the FM radio mode and stores a created file in a folder which indicates public radio broadcasting in operation S1620.

If the digital audio recording/reproduction apparatus determines in operation S1610 that the current mode is not the FM radio mode, the digital audio recording/reproduction apparatus determines in operation S1630 whether the line-in cable is inserted. If the digital audio recording/reproduction apparatus determines in operation S1630 that the line-in cable is inserted, the digital audio recording/reproduction apparatus encodes the audio received through the line-in cable and stores a created file in a folder which indicates an external device in operation S1640. If the digital audio recording/reproduction apparatus determines in operation S1630 that the line-in cable is not inserted, the digital audio recording/reproduction apparatus encodes the audio received through the microphone and stores a created file in a folder indicating the microphone in operation S1650.

A method of setting a reservation recording of a predetermined radio broadcasting program in a digital audio recording/reproduction apparatus, according to an embodiment of the present invention, will now be described. The method of setting the reservation recording of predetermined radio broadcasting includes displaying a setting menu through a user interface. The setting menu preferably includes a menu to set a frequency and a recording start time of the radio broadcasting that is to be reservation-recorded, and to set reservation recording of the radio broadcasting based on a user input signal input through the user interface.

The displaying of the setting menu through a user interface may further include providing a setting menu which includes a menu to set a recording time and the number of reservation recordings of the radio broadcasting which the user wants to be reservation-recorded.

FIG. 17 is a flowchart illustrating a method of recording a still image or video images in a predetermined recording medium in a digital audio recording/reproduction apparatus, according to an example embodiment of the present invention. Referring to FIG. 17, in operation S1710 the digital audio recording/reproduction apparatus determines whether the current capturing standby state is the video capturing mode or the still image capturing mode. In the video capturing mode, the digital audio recording/reproduction apparatus records video data. In the still image capturing mode, the digital audio recording/reproduction apparatus records still image data.

A still image captured in the still image capturing mode is encoded, and the encoded data is stored in a folder, e.g., a [PHOTO] → [ALBUM] folder, indicating the still image, in operation S1720. Video captured in the video capturing mode is encoded, and the encoded data is stored in a folder, e.g., a [VIDEO] → [ALBUM] folder, indicating the video, in operation S 1730.

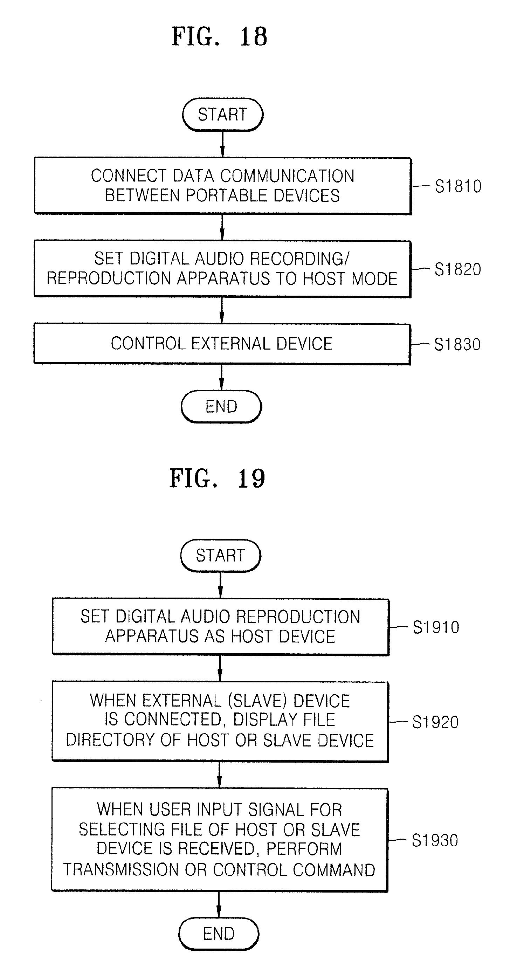

FIG. 18 is a flowchart illustrating a method of setting a data communication line between an external device and a digital audio recording/reproduction apparatus, according to an example embodiment of the present invention. Referring to FIG. 18, a data communication line is connected between portable devices in operation S1810, as illustrated in FIG. 12A. The digital audio recording/reproduction apparatus is set as a host mode in operation S1820. By selecting the USB host mode, the digital audio recording/reproduction apparatus is set to the host mode. The host device set to the host mode controls the external device, which is not set to the host mode, in operation S1830.

FIG. 19 is a flowchart illustrating a method of communicating by a communication line between an external device and a digital audio recording/reproduction apparatus, according to an example embodiment of the present invention. Referring to FIG. 19, the digital audio recording/reproduction apparatus is set as a host device in operation S1910. If a slave device is connected, as shown in the screen 1203 illustrated in FIG. 12B, file directory information of the host device or the slave (non-host) device is displayed in operation S1920. If a user input signal, which selects a desired signal by navigating around a file directory of the host device or the slave device, is received, then a user may command one device to transmit data to the other device, or use one device to control the other device in operation S1930.

For example, when a file is transmitted to the host device, selecting a directory in which the file is stored by displaying the directory information of the host device performing a control command, if necessary, may be further included. The method of providing a user interface, the method of recording a sound source, the method of setting a reservation recording, the method of recording an image, the method of setting a communication line between portable devices, and the method of controlling a device through a communication line between portable devices in the digital audio recording/reproduction apparatus according to embodiments of the present invention may also be embodied as computer readable codes on a computer readable recording medium. The computer readable recording medium may be any data storage device that can store data which can be thereafter be read by a computer system. Examples of computer readable recording media include read-only memory (ROM), random-access memory (RAM), CD-ROMs, magnetic tapes, floppy disks, optical data storage devices, and carrier waves (such as data transmission through the Internet). The computer readable recording medium may also be distributed over network coupled computer systems so that the computer readable code is stored and executed in a distributed fashion.

As described above, aspects of the present invention provide a digital audio recording/reproduction apparatus to record and reproduce a music file and image which allows a user to record an image using a camera function or a video function even while listening to music.

In addition, the digital audio recording/reproduction apparatus having the camera function provides a method of displaying a user interface which effectively provides a music playback function and a camera function.

Using the digital audio recording/reproduction apparatus, an audio or speech signal may be recorded, and the audio signal may be efficiently recorded and managed according to a receiving path of the audio signal. Additionally, aspects of the present invention provide a communication function which transmits a file through a communication line to an external device. Various components of the audio digital recording/reproduction apparatus, as shown in FIG. 14, such as the ISP IC 1415 and back-end chip (CAP) 1427, can be integrated into a single control unit, or alternatively, can be implemented in software or hardware, such as, for example, an application specific integrated circuit (ASIC). As such, it is intended that the processes described herein be broadly interpreted as being equivalently performed by software, hardware, or a combination thereof. As previously discussed, software modules can be written, via a variety of software languages, including C, C++, Java, Visual Basic, and many others. These software modules may include data and instructions which can also be stored on one or more machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). Instructions of the software routines or modules may also be loaded or transported into the wireless cards or any computing devices on the wireless network in one of many different ways. For example, code segments including instructions stored on floppy discs, CD or DVD media, a hard disk, or transported through a network interface card, modem, or other interface device may be loaded into the system and executed as corresponding software routines or modules. In the loading or transport process, data signals that are embodied as carrier waves (transmitted over telephone lines, network lines, wireless links, cables, and the like) may communicate the code segments, including instructions, to the network node or element. Such carrier waves may be in the form of electrical, optical, acoustical, electromagnetic, or other types of signals.

In addition, the present invention can also be embodied as computer readable codes on a computer readable recording medium. The computer readable recording medium is any data storage device that can store data which can be thereafter read by a computer system. Examples of the computer readable recording medium also include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

While there have been illustrated and described what are considered to be example embodiments of the present invention, it will be understood by those skilled in the art and as technology develops that various changes and modifications, may be made without departing from the true scope of the present invention. Many modifications, permutations, additions and sub-combinations may be made to adapt the teachings of the present invention to a particular situation without departing from the scope thereof. Accordingly, it is intended, therefore, that the present invention not be limited to the various example embodiments disclosed, but that the present invention includes all embodiments falling within the scope of the appended claims.

## Claims

1. A digital audio recording/reproduction apparatus comprising:
an input unit arranged to enable a user to reproduce a music file, to record a still image and a video, and to search menus;
a camera module to convert the still image into an image file and the video into a video file;
a storage unit to store the music file, the image file, and the video file; and
a controller to provide a user interface at the input unit which enables the user to select a music playback function to reproduce the music file and to select recording and reproducing functions to record the still image and the video and reproduce the image file and the video file.

2. The digital audio recording/reproduction apparatus of claim 1, wherein the controller generates a recording standby screen which is used to display the still image and the video, analyzes a user input signal input through the input unit, uses the input user input signal to either display the still image, display an operation mode menu for still image recording, display an operation menu which includes a camera mode and a video mode, or display a recorded image file list, and transmits the selected display to the output unit.

3. The digital audio recording/reproduction apparatus of claim 2, wherein the user input signals vary according to which button is pressed by the user, and a length of time the button is pressed by the user.

4. The digital audio recording/reproduction apparatus of claim 2 or 3, wherein, in order to provide the operation mode menu of the still image capturing, the controller displays, through the output unit, the operation mode menu, comprising:
a video recording mode to capture the video;
a continuous shot mode to continuously record the still image a predetermined number of times;
a timer mode to automatically record the still image after a predetermined time elapses;
a camera filter mode to add an effect to the still image;
a flash mode to provide a flash function;
a recording sound setting mode to control a sound generated when the still image recording is performed; and
a resolution setting mode to set a resolution of the still image.

5. The digital audio recording/reproduction apparatus of claim 2 or 3, wherein the operation menu displayed by the controller further comprises:
a music mode to check a music track currently being reproduced;
a navigation mode to search music files, image files, video files, and text files;
a play list mode used to selectively play desired tracks;
an FM radio mode to listen to FM radio;
a text mode to read a text file;
a photo mode to view the image file;
a video mode used to view the video file;
a host mode used to transmit a music file, image file, video file, or text file stored in a main body of the digital audio recording/reproduction apparatus to an external device or to transmit a music file, image file, video file, or text file stored in the external device to the main body; and
a setting mode to set functions, wherein the controller performs a function corresponding to a selected mode among the modes based on a user input signal input through the input unit.

6. The digital audio recording/reproduction apparatus of one of claims 2 to 5, wherein when an operation mode is selected via the operation mode menu, the controller controls the output unit to display the selected operation mode.

7. The digital audio recording/reproduction apparatus of one of claims 2 to 5, wherein when an image file is selected via the recorded image file list, the controller controls the output unit to display the selected image file.

8. A method of providing a user interface in a digital audio recording/reproduction apparatus to record and to reproduce a still image and video, the method comprising:
displaying a recording standby screen to capture a still image and video;
analyzing a user input signal input through a user interface;
recording the still image or video; and
displaying an operation mode menu for still image recording, displaying an operation menu having a camera mode a video recording function, or displaying a recorded image file list, based on the input user input signal.

9. The method of claim 8, wherein the displaying of the recording standby screen comprises:
displaying an image indicating a still image capturing mode is enabled;
displaying an image indicating whether a flash is enabled;
displaying an image indicating resolution of the still image; and
displaying an image indicating remaining memory capacity of a memory used to store a still image displayed on the recording standby screen.

10. The method of claim 8 or 9, wherein the user input signals vary according to which button in the user interface is pressed by a user and a length of time the button is pressed by the user.

11. The method of one of claims 8 to 10, wherein the displaying of the operation mode menu for the still image recording comprises an operation mode menu, comprising:
a video capturing mode to record the video;
a continuous shot mode to continuously record still images a predetermined number of times;
a timer mode to automatically record the still image after a predetermined time elapses;
a camera filter mode to add an effect to the still image;
a flash mode to provide a flash function;
a recording sound setting mode to control a sound generated when the recording of the still image is performed; and
a resolution setting mode to set a resolution of the still image.

12. The method of one of claims 8 to 11, wherein during the displaying of the operation menu, the operation menu further comprises:
a music mode to check a currently reproduced track;
a navigation mode to search music files, video files, still image files, or a text file;
a play list mode used to selectively play desired tracks;
an FM radio mode to listen to FM radio;
a text mode to read a text file;
a photo mode to view the image file;
a video mode to view the video file;
a host mode to transmit a file stored in a main body of the digital audio recording/reproduction apparatus to an external device or transmit a file stored in the external device to the main body; and
a setting mode to set functions, wherein the displaying of the operation menu comprises performing a function corresponding to a mode selected among the modes based on a user input signal input through the input unit.

13. The method of one of claims 8 to 12, wherein the displaying of the operation mode menu for the still image recording comprises:
analyzing a selection signal to select an operation mode included in the operation mode menu, which is input through the user interface; and
activating an operation mode corresponding to the input selection signal.

14. The method of one of claims 8 to 13, wherein the displaying of the recorded image file list comprises:
analyzing a selection signal to select an image file included in the recorded image file list, which is input through the user interface; and
displaying the image file, corresponding to the selection signal, in the photo mode.

15. The method of claim 14, further comprising displaying an operation mode menu for the photo mode, wherein the operation mode menu comprises:
a slide show mode to display stored images as a slide show;
a zoom mode to magnify a stored image;
a photo adjustment mode to adjust brightness of a screen on which the still image is displayed; and
an image filter mode to add an effect to the still image.

16. A method of recording an audio signal in a predetermined recording medium, the method comprising:
setting a file name of the audio signal, wherein the setting of the file name comprises automatically setting the file name of the audio signal by setting a recording date and a recording number as a serial number of the audio signal.

17. A method of receiving a predetermined audio and recording the predetermined audio in a predetermined recording medium, the method comprising:
determining whether a predetermined audio is input in a radio mode in which the predetermined audio is input through a public radio broadcast, encoding the predetermined audio received in the radio mode, and storing the encoded audio in a memory corresponding to the public radio broadcast;
if the predetermined audio is not input in the radio mode, determining whether a line-in cable connected to an external device is inserted into the predetermined recording medium, encoding the predetermined audio input through the line-in cable, and storing the encoded audio in a memory corresponding to an external device audio; and
if the predetermined audio is not input in the radio mode and the line-in cable is not inserted into the predetermined recording medium, encoding a predetermined audio input through a microphone and storing the encoded audio in a memory corresponding to a microphone audio.

18. A method of setting a reservation recording of a radio broadcast, the method comprising:
displaying a setting menu with icons corresponding to a radio frequency and a recording start time and end time of a radio broadcast, using a user interface; and
setting the reservation recording of the radio broadcast based on user input signals, input through the user interface, to select the radio frequency and the recording start and end time.

19. The method of claim 18, wherein the displaying of the setting menu comprises enabling a user to select the recording time of the radio broadcast and the number of reservation recording times of the radio broadcast by displaying a setting menu with a recording time of the radio broadcast and the number of reservation recording times of the radio broadcast which are to be reservation-recorded.

20. A method of recording a digital still image or video compression data in a predetermined recording medium, the method comprising:
determining whether a recording standby state is in a video recording mode or a still image recording mode;
if the recording standby state is in the still image recording mode, encoding a recorded still image and storing the encoded still image in a memory corresponding to the still image; and
if the capturing standby state is in the video recording mode, encoding captured video and storing the encoded video in a memory corresponding to the video.

21. A method of setting a data communication line between a digital audio recording and reproducing apparatus and an external device, the method comprising:
connecting the data communication line between the digital audio recording and reproducing apparatus and the external device;
setting the digital audio recording and reproducing apparatus as a host mode; and
controlling the external device, which is not set into the host mode, by using the digital audio recording and reproducing apparatus, which is set as the host mode.

22. A method of communicating through a communication line between a digital audio recording and reproducing apparatus and an external device, the method comprising:
setting the digital audio recording and reproducing apparatus as a host device;
if the external device, which is a slave device to the host device, is connected to the host device, displaying file directory information of the host device or the slave device; and
if a user input signal to navigate in a file directory of the host device or the slave device and to select a desired file is received, performing a control command of the host device or the slave device according to a transmission operation or the control command.

23. The method of claim 22, further comprising:
displaying directory information of the host device, which is used to perform the control command; and
receiving a selection signal corresponding to a directory to be stored.

24. A multi-purpose apparatus, comprising:
a digital audio recording/reproduction component which records and reproduces digital audio;
a camera module which records and reproduces still images and video;
a radio component which records and reproduces radio broadcast signals;
a microphone which records and reproduces audio;
a text component which records and reproduces text;
a connection terminal which connects the multi-purpose apparatus to an external device;
a display window which displays the recorded still images, the recorded video, the text, and menus; and an input unit in which a user enters commands, wherein the digital audio recording/reproduction component and the camera module may operate simultaneously.

25. The apparatus of claim 24, wherein the radio broadcast signals comprise FM radio broadcast signals.

26. The apparatus of claim 24 or 25, wherein the digital audio recording/reproduction component comprises an MP3 player.

27. The apparatus of claim 26, wherein the MP3 player comprises a DNSe mode.

28. The apparatus of one of claims 24 to 27, wherein the connection terminal comprises a USB connection terminal which connects the multi-purpose apparatus to an external device via a USB cable.

29. The apparatus of one of claims 24 to 28, wherein the input unit comprises:
a navigation button to navigate around the menus displayed in the display window; and
a pair of track moving/quick search buttons to move back and forth between folders stored in the menus.
